(19) Europäisches Patentamt / European Patent Office / Office européen des brevets

(11) EP 1 805 267 B1

(12) **EUROPEAN PATENT SPECIFICATION**

(45) Date of publication and mention of the grant of the patent:
**28.05.2008 Bulletin 2008/22**

(21) Application number: **05797284.6**

(22) Date of filing: **19.10.2005**

(51) Int Cl.:
***C09C 1/00*** *(2006.01)* ***C01G 29/00*** *(2006.01)*

(86) International application number:
**PCT/EP2005/055361**

(87) International publication number:
**WO 2006/045725 (04.05.2006 Gazette 2006/18)**

# (54) INORGANIC BISMUTH-CONTAINING PIGMENTS

ANORGANISCHE, WISMUTHALTIGE PIGMENTE

PIGMENTS INORGANIQUES CONTENANT DU BISMUTH

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.10.2004 EP 04105399**

(43) Date of publication of application:
**11.07.2007 Bulletin 2007/28**

(73) Proprietor: **Ciba Holding Inc.**
**4057 Basel (CH)**

(72) Inventors:
- **BAUER, Didier**
  **F-68680 Kembs (FR)**
- **BUGNON, Philippe**
  **CH-1724 Le Mouret (CH)**
- **HERMANS, Robertus Josef Mathijs**
  **NL-6262 PA Banholt (NL)**
- **KUBBEN, René Guillaume Rosa**
  **NL-6165 SE Geleen (NL)**
- **LUIJTEN, Johannes Maria Martinus**
  **NL-6351 CL Bocholtz (NL)**
- **MÜLLER, Martin**
  **79539 Lörrach (DE)**
- **SCHMITT, Gregor**
  **NL-6418 KK Heerlen (NL)**

(56) References cited:
**GB-A- 444 740**
**US-A- 4 252 570**
**US-B1- 6 464 772**

- **R D SHANNON, R K WARING: "Synthesis and characterization of a new series of BiOI(1-x-x)Br (x)Cl(y) pigments" J PHYS CHEM SOLIDS, vol. 46, no. 3, 1985, pages 325-330, XP002318981**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 805 267 B1

## Description

The invention relates to inorganic coloured pigments based on mixed phases of bismuth oxide iodide with various other inorganic components, to a process for the preparation thereof and to the use thereof in pigmenting high molecular weight organic materials such as surface-coating compositions, plastics and printing inks.

Inorganic coloured pigments differ from black and white pigments in their absorption coefficients and scatter coefficients, which are dependent on the wavelength of the light and the absolute values of which can vary greatly. The dependence of the two coefficients on the wavelength of the light, on particle size, on particle size distribution and on particle shape governs the colour, tinctorial strength and hiding power of coloured pigments.

Inorganic coloured pigments can be categorised according to their colour and/or their chemical constitution, with oxides and oxide hydroxides (iron oxide pigments, chromium oxide pigments), including oxidic mixed-phase pigments, and bismuth, cadmium, cerium sulfide, chromate, ultramarine and iron blue pigments being distinguished.

There is a great need for the conventional heavy-metal-containing lead chromate, lead chromate/molybdate, cadmium sulfide and cadmium sulfoselenide pigments in the yellow to red colour range to be replaced by pigments that are free from toxicological concern. In the search for alternatives to those traditional pigments, a number of non-toxic inorganic pigments have already been found.

For example, yellow bismuth vanadate has been proposed as a substitute for lead chromate (EP 839 874, DE 19 529 837). Bismuth vanadate pigments have very high tinctorial strength, are very brilliant and have high hiding power. With their greenish-yellow hue they, of all inorganic pigments, come closest in their colouristic behaviour to the cadmium yellow and chromium yellow pigments. In order to reduce the cost of the intrinsically expensive bismuth vanadate, multiphase pigments with additives such as silicates, phosphates or sulfates have also been developed (DE 2 933 778, DE 2 940 185 and DE 3 004 083).

The patent specification US 4,455,174 proposes bismuth vanadate/molybdate derivatives and bismuth vanadate/tungstate derivatives as yellow pigments. These are multi-phase products consisting of a bismuth vanadate phase and also a bismuth molybdate and/or bismuth tungstate phase. The patent specification US 4,316,746 also describes bismuth vanadate/molybdate and bismuth vanadate/tungstate pigments which in the case of the bismuth vanadate/molybdates consist of a crystalline phase having a tetragonal scheelite-type structure, whereas in the case of the bismuth vanadate/tungstates two-phase products are present. Further bismuth vanadate pigments are described in the US Patent No. 4,752,460, in which solid solutions of bismuth vanadate having particular amounts of molybdate and/or tungstate are disclosed.

Among the bismuth-containing inorganic coloured pigments, bismuth oxide iodide has also been known as a red pigment for a relatively long time (GB 444,740). Likewise, solid solutions consisting of bismuth oxide iodide, bismuth oxide chloride and bismuth oxide bromide $Bi0I_{1-x-y}Br_xCl_y$ have also been described (US 4,252,570 and R.D. Shannon, R.K. Waring, J. Phys. Chem. Solids, vol. 46, no. 3, 1985, p. 325-330). Those bismuth oxide halide solid solutions crystallise in a form related to the tetragonal PbFCl structure. In terms of colour, the solid solutions vary from yellow through red-orange to coral red when x decreases from 0.75 to 0 and, at the same time, the spacing of the layers in the crystal lattice increases. The colour is substantially governed by x + y. The higher the iodide content, the more marked is the shift towards red. The light-fastness increases as the chloride content decreases. The tinctorial strength of bismuth oxide halide pigments is comparable to that of lead chromate, although the bismuth oxide halide pigments are inferior in terms of colour purity. In addition to the colour purity, the fastness to weathering and hiding power of the bismuth oxide halide solid solutions are not satisfactory.

Attempts have been made at improving the fastness to weathering and to light of the above-mentioned bismuth oxide halide solid solutions by addition of bismuth vanadate (US 6,464,772), which attempts have met with only very little success. At the same time, the combination with bismuth vanadate is associated with a shift towards yellow. According to the method described in US patent specification no. 6,464,772, the bismuth vanadate and bismuth oxide halide components are first prepared separately and are subsequently blended to form a homogeneous mixture. Accordingly, the mixtures produced are only physical mixtures, by means of which yellow-orange shades are obtained, although reduced colour saturation necessarily has to be accepted.

For individual colouration procedures and especially for combination colouration procedures there is a need to extend the colour space with further bismuth oxide halide pigments.

Pigments are required which, without loss of tinctorial strength, have greater hue angles and brightness values than the known bismuth oxide halide pigments and which in addition have improved properties in terms of application technology.

It has been found, surprisingly, that coloured pigments having improved properties are obtained when bismuth oxide iodide as a single compound or as a solid solution with bismuth oxide chloride and/or bismuth oxide bromide is precipitated in the presence of particular inorganic salts, the cations and/or anions of those salts partially replacing bismuth and/or iodide, respectively, in the crystal lattice of the bismuth oxide halide. The coloured pigments so obtained are distinguished from the bismuth oxide halides known hitherto by improved fastness to weathering and to light, by

high hiding power and by pure hues which can be adjusted from yellow through orange to red by variation of the composition. Consequently, on the one hand they extend the class of bismuth vanadate pigments in the yellow-orange to red colour space and on the other hand they are suitable as substitutes for the lead chromate and lead molybdate pigments of toxicological concern, which cannot be imitated - or which can be only inadequately imitated - by customary pigments. The present coloured pigments have, in particular, a higher tinctorial strength, higher colour saturation and/or better dispersibility and dispersion stability than previous comparable coloured pigments. The fastness properties are excellent; in particular, the low migration and the stability to light and to weathering are outstanding. Additional coating is possible but not obligatory.

The invention accordingly relates to a coloured pigment of the general formula

$$BiOI_aBr_bCl_cM_dA_e;$$

wherein M is a cation of the alkaline-earth metals, a cation of the earth metals, a cation of the rare earth metals including the lanthanides or a cation of the metals Ge, Sn, Pb, Sb, Ti, Zr, Hf, Mn, Re, Fe, Ru, Os or Zn or a mixture of cations of those metals;

A is a fluoride, aquoxide, hydroxide, carbonate, silicate, molybdate, tungstate, sulfate, borate or phosphate anion or a mixture of those anions;

a is a number from 0.10 to 0.999; preferably from 0.50 to 0.90; b, c, d and e are numbers from 0 to 0.90; preferably from 0.10 to 0.50; and a + b + c + d + e = 1 and a + b + c < 1.

The coloured pigment is preferably a solid solution.

M is preferably a cation of the metals Mg, Ca, Ba, Zn, Sn, Fe, Mn, Ti, Zr, Ge, AJ, Y, La, Ce or a mixture of cations of those metals, M including cations of differing valencies for one and the same metal. M is preferably the metal ion $Mg^{2+}$, $Ca2^{+}$, $Ba^{2+}$, $Al^{3+}$, $Zn2^{+}$, $Fe^{3+}$, $Sn^{2+}$, $Sn^{4+}$, Mn $Mn^{4+}$, $Mn^{7+}$, $Ti^{2+}$, $Ti^{4+}$, $Ge^{2+}$, $Ge^{4+}$, $Zr^{4+,}$ $Y^{2+,}$ $Y^{3+}$, $La^{3+}$, $Ce^{3+}$ or $Ce^{4+}$.

If A and/or M is a mixture, the mixture is advantageously a mixture of from 2 to 10 components, preferably a mixture of from 2 to 5 components.

A is preferably fluoride.

A also includes the polyanions and hydroxide anions derived from oxides, hydroxides, carbonates, silicates, molybdates, tungstates, sulfates, phosphates and borates.

A includes aquoxide anions, which formally can be derived from oxide and water. In particular, they are to be understood as including anions of oxidaquates, which are obtained from oxide and $H_2O$. Oxidaquates contain non-stoichiometric amounts of $H_2O$ in mobile form as adsorbed capillary water. Also included are anions which are derived from oxide hydrates, in which the water is bonded to the oxide. A special sub-group of aquoxide anions is formed by the likewise included hydroxide anions, which are to be understood as being dissociable, free or optionally hydrated hydroxide ions.

A further includes halide anions, which are derived from salt-like halides. Salt-like halides are, for example, metal salts, alkali metal and alkaline-earth metal salts (e.g. NaCl, KF, $CaBr_2$, $SrI_2$) and ammonium salts (e.g. $NH_4Br$) of hydrohalic acids.

A includes carbonate anions, which are derived from the salts of carbonic acid. The salts of carbonic acid have the anion $CO_3^{2-}$. Replacement of just one H of $H_2CO_3$ by a metal results in the hydrogen carbonates of the general formula $M'HCO_3$, which usually are readily soluble. Hydrogen carbonate anions are also included. Hydrogen carbonates of the alkali metals, alkaline-earth metals and a number of other divalent metals are known. Because all other inorganic carbonates except for the alkali metal carbonates are sparingly soluble in water, alkali metal carbonates are preferably used for preparation of the coloured pigments according to the invention. This does not apply to hydrogen carbonates because all hydrogen carbonates except for sodium hydrogen carbonate are more readily soluble than the corresponding carbonates.

A also includes silicate anions, which are derived from salts of orthosilicic acid $Si(OH)_4$ and their condensation products. Except for pure alkali metal silicates having single-ring or low-aggregation silicate anions, e.g. water glass, silicates are not soluble in any inorganic or organic solvent without decomposition. Therefore, alkali metal silicates are preferably used in the preparation of the coloured pigments according to the invention. In silicates the hydrogen atoms of the OH groups are replaced by metals, although very often, because of removal of intermolecular water between pairs of silicic acid molecules, a number of units come together so that 1 oxygen atom links 2 silicic acid molecules. Repetition of this process results in polymeric structures (polysilicic acid derivatives). A includes silicates having independent "discrete" anions, the so-called nesosilicates (island silicates), which are orthosilicates having the anion $[SiO_4]^{4-}$; e.g.: phenakite $Be_2[SiO_4]$, olivine $(Mg,Fe)_2[SiO_4]$, zircon $Zr[SiO_4]$. The sorosilicates (group silicates) also have discrete anions, in this case the $[SiO_4]$ tetrahedra being linked to a finite group. These include, *inter alia,* the disilicates having the anion $[Si_2O_7]^{6-}$ and a number of, in some cases synthetically prepared, trisilicates, e.g. thortveitite $S_{c2}[Si_2O_7]$ and hemimorphite $Zn_4[(OH)_2/Si_2O_7]-H_2O$. Also included are the so-called cyclosilicates (ring silicates), which likewise have discrete anions.

In these silicates, the $[SiO_4]$ tetrahedra are arranged in rings, e.g. benitoite $BaTi[Si_3O_9]$ (rings of three $SiO_4$ tetrahedra), axinite $Ca_2(Fe,Mg,Mn)Al_2[OH/BO_3/Si_4O_{12}]$ (rings of four $Si0_4$ tetrahedra), beryl $Be_3Al_2[Si_{16}O_{18}]$ (rings of six), milarite and osumilite (double rings of six $SiO_4$ tetrahedra each).

A further includes molybdate anions, which are derived from simple molybdates and from orthomolybdates. In alkaline and neutral solution, molybdates have the general composition $M'_2MoO_4$ or $M''MoO_4$ (M', M" being a monovalent metal or divalent metal, respectively) and on acidification are transformed into isopolymolybdates, especially metamolybdates $\{[Mo_8O_{26}]^{4-}$, octamolybdates} and paramolybdates $\{[Mo_7O_{24}]^{6-}$, heptamolybdates}, which may also be hydrated. Molybdates form not only isopolyacids but also, together with a series of other elements, heteropolyacids, e.g. phosphoromolybdenum acid (12-molybdatophosphoric acid). The anions derived therefrom are likewise included.

Anions of other inorganic polyacids, which unlike heteropolyacids contain central atoms of only one kind, e.g. the anions of the salts disodium disulfate ($Na_2S_2O_7$), disodium tetraborate (borax, $Na_2B_4O_5(OH)_4 \cdot 8\ H_2O$) and pentasodium triphosphate ($Na_5P_3O_{10}$), are also suitable. Anions which are derived from inorganic polyacids having at least two different central atoms are likewise suitable. Such heteropolyacids are formed from, in each case, weak oxygen polyacids of a metal (usually Cr, Mo, V, W) and a non-metal (usually As, I, P, Se, Si, Te) as partial mixed anhydrides, e.g. $H_3[PM_{12}O_{40}]$: 12-molybdatophosphoric acid (dodecamolybdophosphoric acid, M = Mo) or 12-tungstophosphoric acid (dodecatungstophosphoric acid, M = W). Actinides or lanthanides can also function as the second central atom. The anions derived from Keggin acids having the general formula $[(EO_4)M_{12}O_{38}]^{n-8}$ wherein n is the valency of the tetrahedrally coordinated element E (e.g. B, Si, Zn), are also suitable. This also applies to the Anderson-Evans anions, having an octahedrally coordinated hetero atom in accordance with the heterohexametalate type $[(E0_6)M6O_{18}]^{n-12}$.

A also includes tungstate anions, which are derived from the salts of tungstic acid, the tungstates. The anions of monotungstates, $M'_2WO_4$ (M' = monovalent metal), ditungstates, $M'_2W_2O_7$, and of isopolytungstates, $M'_6W_6O_{21}$ (hexatungstates) and $M'_{10}W_{12}O_4$, (dodeca- or para-tungstates), are suitable. Anions of heteropolytungstates, e.g. salts of 12-tungstosilicic acid and 12-tungstophosphoric acid, are likewise suitable. Sodium tungstate $Na_2WO_4 \cdot 2\ H_2O$, ammonium paratungstate $(NH_4)_{10}W_{12}O_{41} \cdot 11\ H_2O$ and ammonium metatungstate $(NH_4)_6H_2W_{12}O_{40}$ are especially suitable for preparation of the coloured pigments according to the invention.

A further includes sulfate anions, which are derived from the salts of sulfuric acid, which are formed when one or both of the H ions of the $H_2SO_4$ molecule are replaced by metal ions. In the first case, hydrogen sulfates of the general formula $M'HSO_4$, which are readily soluble in water, are formed. In the second case, sulfates of the general formula $M_2'SO_4$ are obtained. In addition to the hydrogen sulfate anions, the anions of disulfates of the general formula $M_2'S_2O_7$ are also suitable.

A includes phosphate anions, which are derived from the salts of the various phosphoric acids. These include the primary (acid) orthophosphates (dihydrogen phosphates), which are derived from orthophosphoric acid ($H_3PO_4$), the secondary orthophosphates (hydrogen phosphates) and the tertiary orthophosphates (systematic designation: phosphates). The primary (acid) orthophosphates of the general formulae $M'H_2PO_4$ (e.g. $NaH_2PO_4$) and $M''(H_2PO_4)_2$, e.g. $Ca(H_2PO_4)_2$, are all soluble in water. Among the secondary orthophosphates of the general formulae $M_2'HP0_4$ and $M''HPO_4$ (e.g. $K_2HPO_4$ and $CaHPO_4$), only the alkali metal salts readily dissolve in water. The tertiary orthophosphates of the general formulae $M3'PO_4$ and $M_3''(PO_4)_2$, e.g. $Na_3(PO_4)$ and $Ca_3(PO_4)_2$, are, except for the readily soluble alkali metal salts of alkaline reaction, practically insoluble in water. From the acid salts of orthophosphoric acid there is derived the extensive group of condensed phosphates formed on heating as a result of removal of water, which in turn can be subdivided into metaphosphates (systematic designation: cyclic polyphosphates) and chain polyphosphates (systematic designation: catena-polyphosphates). All phosphate anions derived therefrom are suitable as A.

A further includes borate anions, which are derived from the salts of boric acid. Boric acid salts do not usually originate from orthoboric acid ($H_3BO_3$) or metaboric acid ($HBO_2$) but are derived from relatively water-poor polyboric acids of the general formula Hn-2Bn02n-1. The alkali metal borates (e.g. borax) are soluble in water with alkaline reaction (hydrolysis). The other borates are only sparingly soluble or are insoluble. The likewise suitable anions of metaboric acid, the metaborates $(BO_2)_3^{3-}$, are BO polymers having closed ring or open chain structures.

For the coloured pigment according to the invention preference is given to a being a number from 0.50 to 0.90 and b, c, d and e being a number from 0.10 to 0.50.

Preferably, the coloured pigment according to the invention is crystalline and in the form of a solid solution. The coloured pigment according to the invention has an X-ray diffraction diagram which differs from that of a physical mixture of the individual components BiOI, BiOBr, BIOCI, MOI and BiOA.

The expression "solid solution" has a clear meaning for the skilled person working in the field of pigment chemistry, according to which a solid solution is a homogeneous solid phase that is capable of existing over a range of chemical compositions. According to Hao, Z. and Iqbal, A. in Chemical Society Reviews, 1997, Volume 26, pages 203-213, one of the components in a solid solution assumes the role of a "host" (corresponding to the solvent in a solution) whilst the other component(s) behave(s) as a "guest" (corresponding to the dissolved substance in a liquid solution). The X-ray structure analysis spectrum of a solid solution of such a kind is either identical to or at least very similar to that of the pure "host" component

Preference is given to M being La and d being > 0. Even a very low degree of replacement of the bismuth in the BiOI crystal results in a shift into the red colour space. A shift towards red is likewise obtained by partial replacement of the iodide in the BiOI crystal by fluoride. In contrast, partial replacement of bismuth by Zr, Ti or by a mixture of Zr and Ti results in a shift into the yellow colour space. Preference is therefore also given to M being Zr, Ti or a mixture of Zr and Ti and d being > 0. Finally, a shift towards yellow is likewise obtained by partial replacement of the iodide by tungstate. In a likewise preferred embodiment of the invention, A is accordingly tungstate and e > 0.

Preferred coloured pigments of the present invention include solid solutions of the following general formulae:

- $BiOI_a(WO_4)_e$,
- $BiOI_a(SiO_4)_e$,
- $BiOI_aBr_bCl_cF_e$,
- $BiOI_aBr_bCl_cF_eCa_d$,
- $BiOI_aBr_bCl_cF_{e'}(WO_4)_{e''}$,
- $BiOI_aBr_bCl_cF_{e'}(OH)_{e''}$,
- $BiOI_aBr_bCl_cF_{e'}Zr_d(SO_4)_{e''}$,
- $BiOI_aBr_bCl_cF_{e'}Zr_d(SiO_4)_{e''}$ and
- $BiOI_aBr_bCl_cF_{e'}Al_d(PO_4)_{e''}$,

  wherein a, b, c, d and e are as defined hereinbefore and e' + e" = e.

In addition, the invention relates to substance compositions comprising

(a) at least one of the above-described coloured pigments of the general formula $BiOI_aBr_bCl_cM_dA_e$ ; wherein M, A, a, b, c, d and e are as defined hereinbefore; and

(b) at least one inorganic or organic pigment.

Such substance compositions are preferably in the form of wet or dry physical mixtures.

Special preference is given to the inorganic or organic pigment under (b) being a bismuth vanadate pigment, in which case a $BiVO_4$-containing solid solution is especially advantageous as the bismuth vanadate pigment. Without being limited thereto, preferred $BiVO_4$-containing solid solutions include the following solid solutions: {[$BiVO_4$]•[$CaMoO_4$]}; ([$BiVO_4$]•[$Bi_2$MoO6]•[$Bi_2WO_6$]}; {[$BiVO_4$]•[$Bi_2MoO_6$]} and {[$BiVO_4$]•[$Bi_2WO_6$]}.

Also advantageous are substance compositions comprising, as inorganic or organic pigment as component (b), at least one inorganic pigment which is selected from the group consisting of lead chromate pigment, cerium sulfide pigment, rutile pigment and spinel pigment Also included are mixtures of those pigments as well as mixtures of pigments of the same class and also mixtures of those pigments with bismuth vanadate pigments.

Substance compositions comprising at least one organic pigment as component (b) are also advantageous. Preferred organic pigments are anthraquinone pigments, anthrapyrimidine pigments, azo pigments, azomethine pigments, quinacridone pigments, quinophthalone pigments, diketopyrrolopyrrole pigments, indanthrone pigments, isoindoline pigments, isoindolinone pigments, metal complex pigments, perinone pigments, perylene pigments, phthalocyanine pigments, pyranthrone pigments, pyrazoloquinazolone pigments and thioindigo pigments. Mixtures of those organic pigments are also suitable.

A further embodiment of the invention relates to substance compositions in the form of wet or dry physical mixtures comprising, as component (b), instead of the bismuth vanadate pigment, a coloured pigment of the following general formula:

$$BiOI - (BiOX), . (BiOL)_k$$

wherein

X is Cl, Br, F or a mixture $(Br)_m(Cl)_n(F)_o \times \frac{1}{m+n+o}$,

L is CN, NC, NCO, NCS, O-Z, S-Z or a mixture of a plurality of different CN, NC, NCO, NCS, O-Z and/or S-Z,

Z is $COR_1$, $COOR_1$, $CONR_1R_2$, CN, $CSR_1$, $COSR_1$, $CSOR_1$, $SO_2R_1$, $SO_3R_1$,

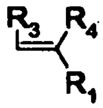

or

$C_6$-$C_{24}$aryl or $C_2$-$C_{24}$heteroaryl each unsubstituted or mono- or poly-substituted by halogen, $NO_2$, CN, $NR_3R_4$, $NR_3R_4R_5^+$, $NR_5COR_3$, $NR_5CONR_3R_4$, $R_3$, $OR_3$, $SR_3$, CHO, $CR_5OR_3OR_4$, $COR_3$, $SO_2R_3$, $SO_3^-$, $SO_3R_3$, $SO_2NR_3R_4$, $COO^-$, $COOR_3$, $CONR_3R_4$, $PO_3^-$, $PO(OR_3)(OR_4)$, $SiR_5R_6R_7$, $OSiR_5R_6R_7$ and/or by $SiOR_5OR_6OR_7$;

j is a number from 0 to 4 , preferably from 0.5 to 1.2, and

k is a number from 0.005 to 3, preferably from 0.05 to 2, especially from 0.1 to 1 ;

m, n and o are each numbers from 0 to $10^6$ but m, n and o are not all simultaneously 0;

preferably, m is $10^6$ and n and o are from 0 to $10^5$; especially, n is from 0 to $10^4$ and o is from 0 to $10^2$;

$R_1$ being $C_3$-$C_{24}$alkyl, $C_3$-$C_2$aalkenyl, $C_3$-$C_{24}$alkynyl, $C_3$-$C_{24}$cycloalkyl, $C_3$-$C_{24}$cycloalkenyl or $C_2$-$C_{12}$heterocycloalkyl each unsubstituted or mono- or poly-substituted by halogen, $NO_2$, CN, $NR_3R_4$, $NR_3R_4R_5^+$ $NR_5COR_3$, $NR_5CONR_3R_4$, $OR_3$, $SR_3$, OBiO, SBiO, $COO^-$, COOH, $COOR_3$, CHO, $CR_5OR_3OR_4$, $COR_3$, $SO_2Ra$, $SO_3^-$, $SO_3H$, $SO_3R_3$ and/or by $OSiR_5R_6R_7$ or being $C_6$-$C_{24}$aryl, $C_7$-$C_{24}$aralkyl, $C_8$-$C_{24}$aralkylene or $C_2$-$C_{24}$heteroaryl each unsubstituted or mono- or poly-substituted by halogen, $NO_2$, CN, $NR_3R_4$, $NR_3R_4R_5^+$, $NR_5COR_3$, $NR_5CONR_3R_4$, $R_3$, $OR_3$, $SR_3$, CHO, $CR_5OR_3OR_4$, $COR_3$, $SO_2R_3$, $SO_3^-$, $SO_3R_3$, $SO_2NR_3R_4$, $COO^-$, $COOR_3$, $CONR_3R_4$, $PO_3^-$, PO $(OR_3)(OR_4)$, $SiR_5R_6R_7$, $OSiR_5R_6R_7$ and/or by $SiOR_5OR_6OR_7$;

$R_2$, independently of $R_1$, being hydrogen or $R_1$, it being possible, if desired, for $R_1$ and $R_2$ to be linked to one another by means of a direct bond or a bridge -O-, -S- or -$NC_1$-$C_8$alkyl- so that altogether a five- or six-membered ring is formed;

$R_3$ and $R_4$ being each independently of the other hydrogen, CN, $OR_5$, $COO^-$, COOH, $COOR_5$, $CONR_5R_6$, $COR_5$, $SO_2R_5$, $SO_3^-$, $SO_3H$, $SO_3R_5$ or $OSiR_5R_6R_7$; or $C_1$-$C_{24}$alkyl, $C_2$-$C_{24}$alkenyl, $C_2$-$C_{24}$alkynyl, $C_3$-$C_{24}$cycloalkyl, $C_3$-$C_{24}$cycloalkenyl or $C_2$-$C_{12}$heterocycloalkyl each unsubstituted or mono- or poly-substituted by halogen, $NO_2$, CN, $NR_5R_8$, $NR_5R_6R_7^+$, $NR_5COR_7$, $NR_5CONR_6R_7$, $OR_5$, $SR_5$, $COO^-$, COOH, $COOR_5$, CHO, $CR_5OR_6OR_7$, $COR_5$, $SO_2R_5$, $SO_3$ , $SO_3H$, $SO_3R_5$ and/or by $OSiR_5R_6R_7$; or $C_7$-$C_{18}$aralkyl, $C_6$-$C_{14}$aryl or $C_2$-$C_{13}$heteroaryl each unsubstituted or mono- or poly-substituted by halogen, $NO_2$, CN, $NR_5R_6$, $NR_5R_6R_7$, $NR_5COR_8$, $NR_5CONR_6R_7$, $R_5$, $OF_5$, $SR_5$, CHO, $CR_5OR_6OR_7$, $COR_5$, $SO_2R_5$, $SO_3^-$, $SO_2NR_5R_6$, $COO^-$, $COOR_{7.}$ $CONR_5R_6$, $PO_3^-$, $PO(OR_5)(OR_6)$, $SiR_5R_6R_7$, $OSiR_5R_6R_7$ and/or by $SiOR_5OR_6OR_7$,

or $NR_3R_4$ being a five- or six-membered heterocycle which may optionally contain a further nitrogen or oxygen atom and which may be mono- or poly-substituted by $C_1$-$C_8$alkyl; and

$R_5$, $R_6$ and $R_7$ being each independently of the others hydrogen, $C_1$-$C_{20}$alkyl, $C_2$-$C_{20}$alkenyl, $C_2$-$C_2$alkynyl, $C_7$-$C_{18}$aralkyl, $C_6$-$C_{14}$aryl or $C_2$-$C_{13}$heteroaryl, it being possible, if desired, for $R_5$ and $R_6$ and/or $R_6$ and $R_7$ to be linked to one another by means of a direct bond or a bridge -O-, -S- or -$NC_1$-$C_8$alkyl- so that altogether a five- or six-membered ring is formed.

In an alternative embodiment, the substance compositions comprising BiOI · $(BiOX)_j$ · $(BiOL)_k$ are in the form of solid solutions.

Preferably, all substance compositions described hereinbefore are prepared in the form of granules having a particle size of from 5 to 3000 μm, more preferably from 10 to 500 m, and are used in that dust-free form for colouring polymeric materials.

In addition, advantageous substance compositions can be made available when the substance composition comprises, instead of (b), $BiOI_aBr_bCl_c$ wherein a, b and c are numbers from 0 to 1 and a + b + c = 1.

The coloured pigments according to the invention, having the general formula $BiOI_aBr_bCl_cM_dA_e$ wherein a, b, c, d and e are as defined hereinbefore, can be obtained in surprisingly simple manner by precipitating BiOI and, optionally, BiOX (X=F, Cl, Br) in the presence of anions $A^{m-}$ and/or cations $M^{n+}$. It is advantageous that it is not necessary for seed

formation and crystal growth to be performed as separate stages. The precipitated product is, moreover, substantially uniform so that it is possible, surprisingly, to carry out physical and/or chemical after-treatment (recrystallisation) in order to obtain the desired particle size and morphology, which is not the case for purely physical compositions.

The coloured pigments according to the invention, having the general formula $BiOI_aBr_bCl_cM_dA_e$ wherein a, b, c, d and e are as defined hereinbefore, can, however, also be prepared by other methods known for solid solutions, for example by grinding the individual components together under a high shear force, where appropriate at high temperature, under high pressure and/or with the addition of a non-polar or, preferably, polar solvent.

The invention accordingly relates also to a process for the preparation of a coloured pigment according to the invention by combining $I^-$ and, optionally, $X^-$ (X=F, Cl, Br) with a solution of $BiO^+$ or $Bi^{3+}$ ions in a solvent under conditions such that a solid which is insoluble in the solvent precipitates out, in which process the anions $A^{m-}$ and/or cations $M^{n+}$ are present in the solvent during precipitation of the solid, and the solid precipitating out has the general formula $BIOI_aBr_bCl_eM_dA_e$ wherein a, b, c, d and e are as defined hereinbefore.

The components may be added all at once or metered in continuously, for example in such a manner that the respective concentrations of the components remain constant during precipitation. It is also possible to use some or all of one or more components, for example $BiO^+$ or all the other ions I , $A^{m-}$and/or $M^{n+}$, as the initial charge and then to add or meter in the remaining ions. The sequence is generally not critical, especially when subsequent recrystallisation is carried out.

Precipitation of the coloured pigment is preferably accomplished by blending a nitric-acid-containing bismuth nitrate solution and a buffered sodium iodide solution optionally containing NaF, NaCl and/or NaBr, $M^{n+}$ in the form of a soluble salt having been included as initial charge in the nitric-acid-containing bismuth nitrate solution and/or $A^{m-}$ in the form of a soluble salt having been included as initial charge in the buffered sodium iodide solution.

Preferably, the process according to the invention is carried out at a pH of from 1.5 to 8, preferably from 3 to 6. It can be carried out in the presence of further components, for example buffer substances, dispersants, crystal growth inhibitors, rheology improvers and binders or other auxiliaries, or in the presence of a substrate to be coated.

Preferred additional components, where present, are conventional surface-active auxiliaries such as, for example, stearic, oleic, benzoic, aminobenzoic, salicylic, phthalic, terephthalic, isophthalic, citric and abietic acid and mixtures thereof, for example colophony, and especially alkali metal, alkaline-earth metal or ammonium salts thereof and commercially available modified, for example partially hydrogenated, natural products such as Staybelite® resins. As a result thereof it is possible for the particle size distribution and the nature of the surface to be varied. The additives are generally used in small amounts, for example from 0.01 to 20 % by weight, preferably from 0.1 to 10 % by weight, based on the coloured pigment according to the invention.

A preferred embodiment of the present invention relates to a process for the preparation of the coloured pigments according to the invention wherein (a) a solution of a $BiO^+$- or $Bi^{3+}$-containing salt is mixed with a solution containing $I^-$ and, optionally, $X^-$ (X=F, Cl, Br) and at least one $M^{n+}$- and/or $A^{m-}$-containing salt, and (b) the resulting mixture is then held in a pH range of from 2 to 8 for from 2 to 30 hours.

In the process steps (a) and (b), the requisite starting materials are usually blended in the form of solutions of their ions. The particles precipitated do not necessarily exhibit pigmentary properties but rather may possibly be X-ray amorphous and/or gel-like initially. In process step (b), the possibly initially amorphous precipitated particles are crystallised. It is advantageous if the particles obtained after process step (a) are not isolated, for example by filtration and washing, but rather crystallised directly.

The individual components of the coloured pigment according to the invention can be brought into contact with one another by blending the individual salt solutions simultaneously or one after the other. Generally, stirring is carried out during or after addition of the individual salt solutions, especially during addition.

In process step (b), the mixture obtained after step (a) is adjusted to a pH in the range from 1.5 to 8.5, preferably from 2 to 6, by addition of a base, especially an inorganic base. In an alternative variant of process step (b), the pH can also be adjusted in steps: for example to a pH in the range from 1.5 to 4.5, especially from 2 to 3.5, for 60 minutes and then to a pH in the range from 2 to 8.5, preferably from 2.5 to 6. In the process, optionally heating the mixture, especially in steps, for example at from 50 to 110°C, advantageously at from 80 to 100°C, before or after increasing the pH has been found to be advantageous. The heating can be carried out, for example, by electrical heating of the outside of the reaction vessel or by directly introducing steam into the reaction vessel.

Blending the various reaction solutions in process step (a) can be carried out portionwise or continuously by feeding in simultaneously or discontinuously by using one solution as initial charge and adding the other solution(s) thereto. Blending the solutions is preferably carried out with stirring, where appropriate under elevated pressure, or in an apparatus provided with a high-performance stirrer.

In a particular embodiment of the process according to the invention, in process step (b), dilution with a one-to three-fold amount of water based on the total amount of the mixture obtained in process step (a) may optionally be carried out. The total time for process step (b) may vary according to the batch size. Generally, from 2 to 30 hours and preferably from 5 to 25 hours are sufficient.

When b is > 0, the molar ratio of iodide to bromide is usually in the range from 1:0.001 to 1:5, preferably in the range from 1:0.001 to 1:3 and very especially in the range from 1:0.01 to 1:1.

When c is > 0, the molar ratio of iodide to chloride is usually in the range from 1:0.001 to 1:5, preferably in the range from 1:0.001 to 1:3 and very especially in the range from 1:0.01 to 1:1.

When d is > 0, the molar ratio of $BiO^+$ or $Bi^{3+}$ to M is usually in the range from 1:0.001 to 1:0.5, preferably in the range from 1:0.001 to 1:0.3 and very especially in the range from 1:0.01 to 1:0.2.

When e is > 0, the molar ratio of iodide to A is usually in the range from 1:0.001 to 1:5, preferably in the range from 1:0.001 to 1:1 and very especially in the range from 1:0.01 to 1:0.5.

The upper concentration limits of the salt solutions used are, in general, governed by the solubility of the salts used, although it is advantageous to use dilute solutions especially for better stoichiometric control during the mixing procedure for the solutions under consideration in accordance with the invention. The concentrations of the salt solutions are usually in the range from 0.001 to 50 % by weight and preferably in the range from 0.01 to 30 % by weight. The solutions are advantageously mixed in the temperature range from 10 to 100°C, preferably from 20 to 70°C.

Bismuth acetate or bismuth nitrate, preferably bismuth(III) nitrate, is generally used as the bismuth salt. In a particular embodiment, bismuth(III) salt solutions can be prepared, for example, by dissolving bismuth nitrate, e.g. BI $(NO_3)_3$•$5H_2O$, in e.g. from 1.0 to 4.0N nitric acid or in acetic acid.

Calcium salt solutions can be prepared, for example, by dissolving $Ca(NO_3)_2$•$4H_2O$ in, for example, water or in from 1.0 to 4.0N nitric acid or in acetic acid.

Tungstate solutions can be prepared, for example, from alkali metal tungstate such as sodium, lithium or potassium tungstate, for example meta-tungstate, $NaWO_3$, or orthotungstate, $Na_3WO_4$, or alkali metal polytungstates or from tungsten pentoxide by dissolution in basic solution.

As molybdate or silicate there are used, for example, the corresponding sodium, potassium, lithium or ammonium salts, or the corresponding oxides are dissolved in basic solution. In the case of the silicate solution, sodium or potassium water glass solutions, especially sodium water glass solutions, are generally used.

As fluoride salts there are used, for example, alkali metal, alkaline-earth metal and ammonium fluorides, e.g. sodium fluoride, potassium fluoride and ammonium fluoride, especially sodium fluoride and potassium fluoride, which are advantageously used in the form of aqueous solutions.

The acid salt solutions used have a pH advantageously in the range from 0 to 6, preferably from 0 to 3. The basic solutions usually have a pH in the range from 9 to 14, preferably between 11 and 14. Suitable inorganic bases are, for example, alkali metal hydroxides such as sodium, potassium or lithium hydroxide, preferably in the form of an aqueous solution having a concentration, for example, in the ranges from 40 to 60 % by weight, from 20 to 40 % by weight, from 10 to 30 % by weight or from 5 to 15 % by weight.

In a further preferred embodiment of the process according to the invention, the coloured pigments according to the invention are prepared by dilution in process step (b) with a one-to three-fold amount of water. The dilution with water can be carried out in the temperature range from 10 to 110°C, especially in the range from 50 to 110°C and very especially from 80 to 100°C.

For working up the compounds obtained according to the invention, the pH is generally increased to the range from 8 to 12, preferably from 8 to 10. Preference is given to subsequently stirring for from 5 to 30 minutes.

The temperature during pH adjustment and subsequent stirring is usually in the range from 10 to 110°C, preferably in the range from 10 to 100°C. In the process according to the invention it is also possible to change the temperature during pH adjustment and subsequent stirring. It is possible, for example, during subsequent stirring to effect cooling to a temperature in the range from 10 to 100°C, preferably from 10 to 80°C.

Isolation is generally carried out in conventional manner, for example by filtering off, washing the filter cake with water to remove soluble salts, drying and pulverising.

Drying is generally carried out at a temperature in the range from 90 to 750°C and preferably from 110 to 500°C. Drying is preferably carried out in the range from one hour to 48 hours and especially in the range from 5 to 20 hours.

Suitable drying apparatuses such as drying cabinets, paddle dryers, spray dryers and vacuum dryers will be generally known to the person skilled in the art.

After drying, the pigment is generally disagglomerated and ground using methods known to the person skilled in the art, for example by sieving or centrifuging.

In a preferred embodiment the present invention relates to a process for bringing about a shift towards yellow in solid solutions of the general formula $BiO_aBr_bCl_c$, wherein a is a number from 0.10 to 1 and b and c are numbers from 0 to 0.90 and a + b + c = 1, in which process a bismuth oxide halide wherein bismuth has been partially replaced by zirconium, titanium or a mixture of zirconium and titanium and/or wherein iodide has been partially replaced by tungstate is prepared in accordance with the process described hereinbefore. The shift in hue Δh (hue value) is from 1 to 30, preferably from 5 to 15 and more preferably from 7 to 10.

In a preferred embodiment the present invention relates to a process for bringing about a shift towards red in solid solutions of the general formula $BiOI_aBr_bCl_c$, wherein a is a number from 0.10 to 1 and b and c are numbers from

0 to 0.90 and a + b + c = 1, in which process a bismuth oxide halide wherein bismuth has been partially replaced by lanthanum and/or wherein iodide has been partially replaced by fluoride is prepared in accordance with the process described hereinbefore. The shift in hue $\Delta$h (hue value) is from -0.5 to -15, preferably from -1 to -10 and more preferably from -3 to -5.

in a further particular embodiment of the process according to the invention for the preparation of coloured pigments based on bismuth oxide iodide, precipitation is carried out in the presence of precursors of effect pigments, for example mica or titanium oxide platelets.

A very great variety of different kinds of effect pigments are well known, for example metallically reflecting, iridescent, goniochromatic or holographic effect pigments. They are, for example, platelet-shaped pigments, metal flakes, natural or synthetic micas, which may additionally be coated with high-refraction dielectrics (for example, metal oxides), also sandwiches of a plurality of differently refracting layers (not only layered silicates) and, furthermore, cholesteric liquid-crystalline mesophases (dichroitic liquid-crystalline polymers), Raleigh or Mie particles, the effects of which are based on metallic gloss, scatter and/or interference effects, possibly additionally combined with selective or non-selective light absorption.

Effect pigments and their precursors are usually distinguished by two substantially flat and parallel surfaces, the ratio of length to height being at least 5:1, the ratio of width to height being at least 3 :1, and the ratio of length to width being at most 5:1, preferably the ratio of length to height being at least 10:1, the ratio of width to height being at least 5:1, and the ratio of length to width being at most 3 :1, and especially the ratio of length to height being at least 20: 1, the ratio of width to height being at least 10: 1, and the ratio of length to width being at most 2 :1. When a surface coated with effect pigments dries, the effect pigment particles within the surface coating orient themselves substantially parallel to the surface so that a coloured coated surface illuminated by a fixed white light source can exhibit different colours and/or brightness in dependence on the viewing angle and the nature of the effect pigment.

The invention accordingly relates especially to platelets having a length of from 2 $\mu$m to 5 mm, a width of from 2 $\mu$m to 2 mm and a thickness of from 50 nm to 1.5 $\mu$m, the ratio of length to height being at least 5 :1, the ratio of width to height being at least 3 :1, and the ratio of length to width being at most 5 :1, which platelets are coated with a layer of the coloured pigment of formula $BiOI_aBr_bCl_cM_dA_e$, wherein M, A, a , b, c, d and e are as defined hereinbefore. The amount of coating of coloured pigment of formula $BiOI_aBr_bCl_cM_dA_e$ is advantageously from 1 to 1000 % by weight, preferably from 5 to 500 % by weight, especially from 10 to 200 % by weight, based on the weight of the uncoated platelets.

Preferred effect pigments are metal flakes of, for example, aluminium, chromium, nickel, gold, silver, titanium, tantalum, zircon, Hastelloy®, steel or bronze, pearlescent pigments, for example interference pigments such as Chromaflair®, Colorstreae®, Variochrom® and Xirallic® types, uncoated or coated micas such as Flonac®, Florapearl®, Iriodin® or Mearlin® types and also platelet-shaped pigments such as graphite, molybdenum disulfide, lead hydroxycarbonate, iron oxide or organic pigments, for example of the quinacridone, diketopyrrolopyrrole, perylene or phthalocyanine class, such as 2,9-dichloroquinacridone, carbazole violet or copper phthalocyanine which may or may not be halogenated. Special preference is given to metal flakes and platelet-shaped particles whose surface (for example the top coating) consists of an inorganic oxide. Surprisingly, adhesion to a very great variety of substrates is excellent, with outstanding light-fastness properties being obtained.

The invention accordingly relates also to a process for coating particles with the coloured pigment according to the invention by combining $I^-$ and, optionally, $X^-$ (X=F, Cl, Br) with a solution of $BiO^+$ or $Bi^{3+}$ ions in a solvent under conditions such that a solid which is insoluble in the solvent precipitates out, in which process $M^{n+}$ and/or $A^{m-}$ is present in the solvent during precipitation of the solid, and the particles are coated with a coloured pigment of formula $BiOI_aBr_bCl_cM_dA_e$.

In the simplest embodiment, the particles to be coated are simply suspended in the precipitation medium, for example by means of stirring or ultrasound. Substrates of large surface area can be kept in contact with the agitated precipitation medium. That can be done before or even during precipitation of the coloured pigments according to the invention, preferably before or in the first phase of precipitation, for example in the first third of precipitation or until halfway through precipitation in terms of amount. However, it is also possible for the coating according to the invention to be carried out subsequently to preparation of the particles to be coated (for example in the sol/gel process), it being possible to dispense with intermediate isolation and, if desired, to proceed in the same vessel. This also makes it possible for nano-partides to be coated.

In a further embodiment, a surface treatment is additionally carried out in order to increase stability with respect to environmental influences, heat, acids or alkalis and to improve dispersibility in various systems such as, for example, surface-coating compositions, plastics or printing inks. Such surface treatments will be known *per se* to the person skilled in the art. Conventional layers are, for example, fluorides, phosphates, oxides or silicates of silicon, boron, aluminium, calcium or magnesium.

The coated coloured pigments are distinguished especially by fineness (tinctorial strength), colour saturation (chroma) and stability (fastness to light and to weathering). They-can be used on their own or in admixture with any other pigments or effect pigments {for example, those disclosed hereinbefore), for example in the form of physical

mixtures ("blends"). For physical mixtures it is immaterial whether the pigments are in wet, dry or pre-suspended form on being blended with one another, for example by mixing, dry- or wet-grinding, granulating, extruding, kneading, pouring, moulding, dispersing, fluidising or tower drying.

In order to improve the properties of the pigment, such as stability with respect to heat, light and chemical reactions, the surface of the coloured pigments obtained according to the invention can be coated with an inorganic or organic coating material during their preparation or preferably after the process steps described hereinbefore, by treatment in accordance with methods that are known and, for example, described in US 3,370,971, US 3,639,133, US 4,046,588 and US 5,123,965. The treatment can be carried out in one or more steps. For that purpose, the coloured pigments are treated, for example, with inorganic substances, e.g. compounds of aluminium, of iron, of chromium, of magnesium, of titanium, of antimony, of cerium, of zirconium, of zinc or of silicon, or mixtures thereof, such as, especially, zinc/aluminium mixtures.

Suitable coating materials are generally inorganic substances, such as phosphates and pyrophosphates of zinc, aluminium, calcium, magnesium, bismuth, iron or chromium, e.g. zinc phosphate [$Zn_3(PO_4)_2$], aluminium phosphate [$AlPO_4$], calcium phosphate [$Ca_3(PO_4)_2$], calcium pyrophosphate [$Ca_2P_2O_7$], magnesium phosphate [$Mg_3(PO_4)_2$], bismuth phosphate [$BiPO_4$], iron(II) phosphate [$Fe_3(PO_4)_2$], iron(III) phosphate [$FePO_4$], chromium(III) phosphate [$CrPO_4$] and also calcium salts of oligophosphates, e.g. the calcium salt of Graham's salt, or a mixture of phosphates;
hydroxides, e.g. aluminium hydroxide [$Al(OH)_3$], zinc hydroxide [$Zn(OH)_2$], iron(II) hydroxide [$Fe(OH)_2$], iron(III) hydroxide [$Fe(OH)_3$], strontium hydroxide [$Sr(OH)_2$], calcium hydroxide [$Ca(OH)_2$], bismuth hydroxide [$Bi(OH)_3$], barium hydroxide [$Ba(OH)_2$], chromium(III) hydroxide [$Cr(OH)_3$], vanadium(IV) hydroxide [$V(OH)_4$], cobalt(II) hydroxide [$Co(OH)_2$], manganese hydroxide [$Mn(OH)_2$] or a mixture of hydroxides;
oxides or hydrated oxides, e.g. tin(II) oxide hydrate [$SnO\cdot xH_2O$], tin(IV) oxide hydrate [$SnO_2\cdot xH_2O$], titanium dioxide hydrate [$TiO_2\cdot xH_2O$], zirconium dioxide hydrate [$ZrO_2\cdot xH_2O$], cerium(III) oxide hydrate [$Ce_2O_3\cdot xH_2O$], cerium(IV) oxide hydrate [$CeO_2\cdot xH_2O$], silicon dioxide [$SiO_2$], antimony(III) oxide hydrate [$Sb_2O_3\cdot xH_2O$], antimony(V) oxide hydrate [$Sb_2O_5\cdot xH_2O$] or a mixture of oxides or hydrated oxides.

Also suitable are carbonates, nitrates, fluorides, fluorosilicates, molybdates, tungstates and sulfates, e.g. calcium carbonate [$CaCO_3$], magnesium carbonate [$MgCO_3$], bismuth oxide nitrate [$BiO(NO_3)$], bismuth oxide fluoride [$BiOF$], calcium hexafluorosilicate [$CaSiF_6$], calcium molybdate [$CaMoO_4$], especially sulfates, e.g. calcium sulfate [$CaSO_4$], or mixtures thereof, especially $CaSO_4$.

Also possible are any combinations of phosphates, hydroxides, oxides and hydrated oxides and salts that can be applied to the pigments. Preference is given to the use of hydroxides and phosphates of zinc or aluminium and especially the phosphates of zinc and aluminium. Special preference is given to a mixture of zinc phosphate and aluminium phosphate.

The amount of coating material is advantageously in the range from 1 to 50 % by weight, preferably in the range from 3 to 30 % by weight and especially in the range from 5 to 20 % by weight, based on the total weight of the treated pigment

The present invention accordingly relates also to compositions comprising the coloured pigments according to the invention to the surface of which a coating material has been applied.

Furthermore, a preference of the present invention relates to compositions comprising the coloured pigments according to the invention to the surface of which there has been applied a coating material of compounds of aluminium, of iron, of chromium, of magnesium, of titanium, of antimony, of cerium, of zirconium, of zinc or of silicon, or zinc phosphate or mixtures thereof such as, especially, zinc/aluminium mixtures.

The present invention relates also to a process for the preparation of the above compositions, wherein the coloured pigments according to the invention are treated with a coating material.

Furthermore, the present invention relates to a process for the preparation of the above compositions, wherein a coating material of compounds of aluminium, of iron, of chromium, of magnesium, of titanium, of antimony, of cerium, of zirconium, of zinc or of silicon, or mixtures thereof, is applied to the surface of the coloured pigments according to the invention.

In order to improve certain pigment properties, the products obtained according to the invention may additionally be treated with texture-improving agents, for example with long-chain aliphatic alcohols, esters, acids or salts, amines or amides thereof, and with waxes or resinous substances, for example abietic acid, or hydrogenation products, esters or salts thereof, and also with non-ionic, anionic or cationic surface-active agents.

The products obtained in accordance with the invention may, if desired, be converted into non-dusty pigment preparations using conventional methods such as described, for example, in US 4,762,523. The present invention therefore relates also to the use of the pigments according to the invention in the preparation of non-dusty pigment preparations.
The present invention accordingly relates also to a process for the preparation of non-dusty pigments, wherein

a) the coloured pigments according to the invention are blended with a surface-active substance,

b) drying is then carried out, and then
c) mixing with dust-binding agents is carried out
d) until the smear point is reached.

The mixing of the coloured pigment according to the invention with the surface-active substances is generally carried out using known methods of blending, such as stirring, mixing or kneading. The coloured pigments according to the invention may, where appropriate, also comprise water. The amount of water relative to the pigment is generally selected in the range from 80 to 5 % by weight, preferably in the range from 50 to 10 % by weight, based on the total amount of substances used. Where appropriate, the mixture comprising pigment and the surface-active compound may be filtered and isolated in the form of a filter residue.

The mixture comprising the coloured pigment according to the invention and the surface-active compound, or the filter residue, is dried at temperatures in the range from 30 to 150°C. The dried mixture is generally blended with a dust-binding agent such as mineral oil, the boiling point of which is preferably above 70°C, waxes or water.

From 10 minutes to 2 hours, especially from 15 minutes to 45 minutes, are generally required to reach the smear point, the product generally being obtained in the form of pourable, non-dusty, fine granules. The mentioned 'smear point' as understood by the present invention is reached when the pourable, fine granules mentioned above have formed, are non-dusty and, to a slight extent, result in a smear effect on the walls of the mixing equipment. The smear point is reached when there has not yet been formed a cohesive cement-like mass, as defined, for example, according to the oil absorption value determination in accordance with DIN 53199 (see also Ullmanns Enzyklopädie der technischen Chemie, 4th Edition, Volume 18, page 565). In order to reach the smear point there are usually used generally known mixing apparatuses, such as kneaders or mixers and other apparatuses that produce sufficient shear stress to bring the mixture to the shear point.

Surface-active substances may usually be long-chain polyesters as described, for example, in DE-A 2 162 484. In general, the amount of surface-active substance relative to the coloured pigment according to the invention is selected in the range from 0.5 to 10 % by weight, based on the total amount of substances used. In general, the amount of dust-binding agent relative to the coloured pigment according to the invention is selected in the range from 0.5 to 25 % by weight, based on the total amount of substances used. In general, the amount of coloured pigment according to the invention relative to the dust-binding agent is selected in the range from 75 to 97.5 % by weight, based on the total amount of substances used.

The present invention relates also to compositions comprising

(a) from 75 to 97.5 % by weight of coloured pigment according to the invention,
(b) from 0.1 to 10 % by weight of surface-active substance and
(c) from 0.1 to 25 % by weight of dust-binding agent,

the sum of the components adding up to 100 % by weight.

The coloured pigments according to the invention can be used for any customary purpose, for example in the mass-colouring of polymers, surface-coating compositions (including effect finishes, including those for the automotive sector) and printing inks, or also, for example, for applications in cosmetics.

The coloured pigments and coatings according to the invention have yellow, orange or reddish colours and can be used with excellent results for pigmenting high molecular weight organic material. They are also especially well suited to combination with customary white, black or coloured pigments, especially with inorganic and organic pigments such as, for example, diketopyrrolopyrroles, quinacridones, dioxazines, perylenes or phthalocyanines, and also with effect pigments of similar or different colour.

In mixtures, the ratio of coloured pigment according to the invention to other pigments is advantageously from 1 : 1000 to 1000:1, preferably from 1:100 to 100:1, especially from 1:10 to 10:1.

The high molecular weight organic material for the pigmenting of which the coloured pigments or pigment compositions according to the invention may be used may be of natural or synthetic origin. High molecular weight organic materials usually have molecular weights of about from $10^3$ to $10^8$ g/mol or even more. They may be, for example, natural resins, drying oils, rubber or casein, or natural substances derived therefrom, such as chlorinated rubber, oil-modified alkyd resins, viscose; cellulose ethers or esters, such as ethylcellulose, cellulose acetate, cellulose propionate, cellulose acetobutyrate or nitrocellulose, but especially totally synthetic organic polymers (thermosetting plastics and thermoplastics), as are obtained by polymerisation, polycondensation or polyaddition. From the class of the polymerisation resins there may be mentioned, especially, polyolefins, such as polyethylene, polypropylene or polyisobutylene, and also substituted polyolefins, such as polymerisation products of vinyl chloride, vinyl acetate, styrene, acrylonitrile, acrylic acid esters, methacrylic acid esters or butadiene, and also copolymerisation products of the said monomers, such as especially ABS or EVA.

From the series of the polyaddition resins and polycondensation resins there may be mentioned condensation

products of formaldehyde with phenols, so-called phenoplasts, and condensation products of formaldehyde with urea, thiourea or melamine, so-called aminoplasts, and the polyesters used as surface-coating resins, either saturated, such as alkyol resins, or unsaturated, such as maleate resins; also linear polyesters and polyamides, polyurethanes or silicones.

The said high molecular weight compounds may be present singly or in mixtures, in the form of plastic masses or melts. They may also be present in the form of their monomers or in the polymerised state in dissolved form as film-formers or binders for surface-coating compositions or printing inks, such as, for example, boiled linseed oil, nitrocellulose, alkyd resins, melamine resins and urea-formaldehyde resins or acrylic resins.

Depending on the intended purpose, it has proved advantageous to use the coloured pigments according to the invention as toners or in the form of preparations. Depending on the conditioning method or intended application, it may be advantageous to add certain amounts of texture-improving agents to the coloured pigment before or after the conditioning process, provided that this has no adverse effect on use of the coloured pigments for colouring high molecular weight organic materials, especially polyethylene. Suitable agents are, especially, fatty acids containing at least 18 carbon atoms, for example stearic or behenic acid, or amides or metal salts thereof, especially magnesium salts, and also plasticisers, waxes, resin acids, such as abietic acid, rosin soap, alkylphenols or aliphatic alcohols, such as stearyl alcohol, or aliphatic 1,2-dihydroxy compounds containing from 8 to 22 carbon atoms, such as 1,2-dodecanediol, and also modified colophony maleate resins or fumaric acid colophony resins. The texture-improving agents are added in amounts of preferably from 0.1 to 30 % by weight, especially from 2 to 15 % by weight, based on the end product.

The coloured pigments according to the invention can be added in any tinctorially effective amount to the high molecular weight organic material being pigmented. A pigmented substance composition comprising a high molecular weight organic material and from 0.01 to 80 % by weight, preferably from 0.1 to 30 % by weight, based on the high molecular weight organic material, of a coloured pigment according to the invention is advantageous. Concentrations of from 1 to 20 % by weight, especially of about 10 % by weight, can often be used in practice.

High concentrations, for example those above 30 % by weight, are usually in the form of concentrates ("masterbatches") which can be used as colorants for producing pigmented materials having a lower pigment content, the coloured pigments according to the invention having an extraordinarily low viscosity in customary formulations so that they remain readily processible. Concentrates frequently also comprise known surface-active substances, such as surfactants, natural or synthetic resins (for example, colophony or derivatives thereof) or dispersants or rheology improvers (for example, polar derivatives of chromophores), in which case the dispersibility and/or rheology in inks, surface-coating compositions and polymers is generally improved.

For the purpose of pigmenting organic materials, the coloured pigments according to the invention may be used singly, but it is also possible, in order to achieve different hues or colour effects, to add to the high molecular weight organic substances, in addition to the pigments according to the invention, any desired amounts (for example, from 0.1 to 100 % by weight, based on the coloured pigments according to the invention) of other colour-imparting constituents, such as white, coloured, black or effect pigments. When coloured pigments are used in admixture with the coloured pigments according to the invention, the total amount thereof is preferably from 0.1 to 10 % by weight, based on the high molecular weight organic material. Especially high goniochromicity is provided by the preferred combination of a coloured pigment according to the invention with an effect pigment of another colour, especially of a complementary colour, the difference in hue ($\Delta H^*$) between colorations made using the effect pigment and colorations made using the coloured pigment being, at a measurement angle of 10°, from 20 to 340, especially from 150 to 210. In multi-layer effect finishes, the effect pigment and coloured pigment may advantageously be present in neighbouring media.

The pigmenting of the high molecular weight organic substances with the coloured pigments according to the invention is carried out, for example, by admixing such a pigment, where appropriate in the form of a masterbatch, with the substrates using roll mills or mixing or grinding apparatuses. The pigmented material is then brought into the desired final form using methods known *per se*, such as calendering, compression moulding, extrusion, coating, pouring or injection moulding. Any additives customary in the plastics industry, such as plasticisers, fillers or stabilisers, can be added to the polymers, in customary amounts, before or after incorporation of the pigment. In particular, in order to produce non-rigid mouldings or to reduce their brittleness, it is desirable to add plasticisers, for example esters of phosphoric acid, phthalic acid or sebacic acid, to the high molecular weight compounds prior to shaping.

For pigmenting surface-coating compositions and printing inks, the high molecular weight organic materials and the coloured pigments according to the invention, where appropriate together with customary additives such as, for example, fillers, other pigments, siccatives or plasticisers, are finely dispersed or dissolved in the same organic solvent or solvent mixture, it being possible for the individual components to be dissolved or dispersed separately or for a number of components to be dissolved or dispersed together, and only thereafter for all the components to be brought together.

The colorations obtained, for example in plastics, surface-coating compositions or printing inks, especially in surface-coating compositions or printing inks, more especially in surface-coating compositions, are distinguished by excellent properties, especially by extremely high saturation and outstanding fastness properties.

When the high molecular weight material being pigmented is a surface-coating composition, it is especially a speciality surface-coating composition, very especially an automotive finish.

The coloured pigments according to the invention are also suitable for cosmetic purposes, for example for making-up the lips or the skin and for colouring the hair or the nails. The invention accordingly relates also to a cosmetic preparation or formulation comprising from 0.0001 to 90 % by weight of a pigment according to the invention and from 10 to 99.9999 % of a cosmetically suitable carrier material, based on the total weight of the cosmetic preparation or formulation.

Such cosmetic preparations or formulations are, for example, lipsticks, mascara preparations, blushers, eye-shadows, eye-liners, foundations, nail varnishes or hair shampoos, for example in the form of sticks, ointments, creams, emulsions, suspensions, dispersions, powders or solutions. The cosmetic preparations and formulations according to the invention contain the pigment according to the invention preferably in an amount of from 0.005 to 50 % by weight, based on the total weight of the preparation.

Suitable carrier materials for the cosmetic preparations and formulations according to the invention include the customary materials used in such compositions.

Examples

The Examples that follow illustrate the invention without limiting the scope thereof (unless otherwise specified, "%" is always percent by weight).

Synthesis procedure

Synthesis of the coloured pigments according to the invention can be carried out in various ways, in which soluble bismuth compounds are caused to react with the other soluble components. Suitable starting materials are, for example, soluble nitrates such as calcium nitrate, zirconyl nitrate and bismuth nitrate, the latter being obtainable as crystalline pentahydrate or as bismuth nitrate solution in a nitric-acid-containing medium, and alkali metal salts of the appropriate halides and of the appropriate anions used such as, for example, sodium tungstate, sodium silicate, sodium phosphate etc.. The addition sequence can generally be freely selected, although the reactivity of the components in relation to the medium and the pH has to be borne in mind. In a suitable procedure, the anions such as, for example, an alkaline sodium silicate solution are initially introduced into the optionally acetate-buffered solution of halide anions (e.g. NaI, KBr, NaF), and accordingly the cations such as, for example, $Ti(i\text{-}OPr)_4$, $ZrO(NO)_3)_2$, $Ce(NO_3)_3$, $La(NO_3)_3$, $Ca(NO_3)_3$ solution are initially introduced into the acetic- or nitric-acid-containing solution of $Bi(NO_3)_3$.

The cation and anion additives are generally used in amounts of, for example, 0.1 - 90 mol %, preferably 0.3 - 40 mol %, based on the total pigment content. Appropriate halide additives such as fluoride, chloride, bromide are used in amounts of 0 - 94.9 mol 9%, preferably 0 - 50 mol %. The amount of BiOI is, as already mentioned hereinbefore, from 5 mol % to 99.9 mol %, preferably from 50 mol % to 99.7 mol %.

Pigment formation is accomplished on mixing of the two solutions in a reaction vessel with stirring and, at room temperature, is complete after a total of 2 to 24 hours, giving rise to a coloured pigment according to the invention. The temperature can be selected from 10 to 100°C, preferably from 15 to 70°C, in which case the reaction time can be reduced and the pigment properties varied.

The pH of the mixture can be selected from 0 to 10; preference is given to pH's from 1.5 to 8; special preference is given to pH's from 2 to 6. By selecting the pH it is possible to vary the pigment properties.

Application procedure

The coloured pigments obtained in accordance with the procedures hereinbelow are applied in an alkyd/melamine surface-coating composition according to the following procedure: 37.0 g of an alkyd/melamine surface-coating composition of the following formulation

| | |
|---|---|
| 18.7 g | of a short-chain alkyd resin (tradename Setal® 84xx70 (70 %) from Synthese) |
| 7.2 g | of a melamine resin (tradename Setamin® US 132 BB70 (70 %) from Synthese) |
| 7.8 g | of Solvesso 100 |
| 1.7 g | of n-butanol |
| 0.8 g | of Depanol J |
| 0.8 g | of isophorone |

together with 11.0 g of the coloured pigments prepared in the Examples and 40 g of glass beads (3 mm diameter) are introduced into a 100 ml glass vessel with a screw-top closure and are dispersed on a Scandex apparatus until a fineness of 10 μm (Hegman gauge) has been achieved.

The surface-coating composition is then spread out on a contrast card (wet film thickness 100 μm), exposed to the air for 20 minutes and stoved at a temperature of 130°C for 30 minutes. The dried surface coating has a film thickness of 25 μm.

Determination of fastness to weathering (DE)

The determination of fastness to weathering (resistance to weathering) was carried out in accordance with ISO 4892-1-1994: short resistance-to-weathering test (simulation of natural weathering by filtered xenon arc radiation and water application by sprinkler)

| | |
|---|---|
| Light source: | Xe 6500W |
| Filter combination: | Boro S / Boro S |
| Illumination intensity: | 0.44 W/$m^2$ at 340 nm |
| Black panel temperature: | 65°C |
| Chamber temperature: | 40°C |
| Relative humidity: | 70 % |

| | |
|---|---|
| Cycle 1: | irradiation for 102 minutes without water application by sprinkler |
| Cycle 2: | irradiation for 18 minutes with water application by sprinkler |

The resistance-to-weathering test was carried out over a total period of 500 hours.

Preparation Examples

Examples 1a-g: (prior art according to US 4,252,570: BiOI/Br/Cl)

A solution consisting of 5.5 g of potassium iodide, 1.0 g of potassium bromide and 10 g of sodium acetate in 400 mL of water is stirred, at room temperature, into a solution of 20 g of $Bi(NO_3)_3 \cdot 5H_2O$ in 30 mL of glacial acetic acid. A yellow to orange-red precipitate is formed, which is stirred for a further 16 hours at room temperature. The precipitate is then washed with water, with decanting, until salt-free, and is filtered off and dried at 120°C..

Instead of 5.5 g of potassium iodide and 1.0 g of potassium bromide, the starting materials and amounts indicated in the following Table are used in Examples 1 b-g.

| Example 1 | Amount [g] | Starting material | L* | C* | h | Fastness to weathering DE |
|---|---|---|---|---|---|---|
| | | | | | | |
| a | 5.5/1.0 | KI/KBr | 62.8 | 61.0 | 51.9 | 23.2 |
| b | 4.1/2.0 | KI/KBr | 71.0 | 66.6 | 59.6 | 33.3 |
| c | 2.7/2-9 | KI/KBr | 77.0 | 68.3 | 68.2 | 40.7 |
| d | 1.4/3.9 | KI/KBr | 85.5 | 61.3 | 81.9 | 51.9 |
| e | 5.5/0.6 | KI/KCl | 63.2 | 62.7 | 52.8 | 14.8 |
| f | 4.1/1.2 | KI/KCl | 66.4 | 66.5 | 55.9 | 37.9 |
| g | 5.5/0.5/0.4 | KI/KBr/KCl | 63.0 | 62.2 | 52.7 | 13.3 |

Examples 2 a-d: (BiOI/Br/CUF)

A solution consisting of 315 g of bismuth nitrate solution (403.3 g of Bi per L) and 125 mL of acetic acid (80 %) is stirred, at room temperature, into a solution of 60.6 g of potassium iodide and 90 g of sodium acetate in 3.6 L of water. A yellow to orange-red precipitate is formed. The pH of the suspension is increased to 5.0 using sodium hydroxide solution (20 %) and stirring is carried out overnight. The precipitate is then filtered off, washed with water until salt-free and dried at 110°C.

Instead of potassium iodide, the starting materials and amounts indicated in the following Table are used in

Examples 2 b-d.

| Example 2 | Amount [g] | Starting material | L* | C* | h | Fastness to weathering DE |
|---|---|---|---|---|---|---|
| a | 60.6 | KI | 55.9 | 52.7 | 47.1 | 2.4 |
| b | 36.3/17.4 | KI/KBr | 67.6 | 68.3 | 56.0 | 6.5 |
| c | 36.3/10.9 | KI/KCl | 69.9 | 71.3 | 58.9 | 10.5 |
| d | 36.3/5.8 | KI/NaF | 54.5 | 62.5 | 41.4 | 1.6 |

Examples 3. a-c: (BiOI/M)

A mixture consisting of 70 g of bismuth nitrate solution (403.3 g of Bi per L), 200 mL of 20 % acetic acid and 0.15 g of titanium tetraisopropoxide $Ti(i\text{-}OPr)_4$ is added, at room temperature, with vigorous stirring, to a solution of 16 9 of sodium iodide and 30 g of 30 % sodium hydroxide solution in 600 mL of water. A red precipitate forms. The pH of the suspension is adjusted to 3.2 using sodium hydroxide solution (8 %) and stirring is carried out for 24 hours. The stirrer is then switched off; decanting, addition of water and stirring up again are carried out three times; finally, filtration is carried out and the filter cake is washed three times with 200 mL of water. After drying at 100°C, the yield, based on $Bi(NO_3)_3$, is practically quantitative.

Instead of 0.15 g of titanium tetraisopropoxide $Ti(i\text{-}OPr)_4$, the amounts indicated in the following Table are used in Examples 3. b-c:

| Example 3 | Amount | Starting material | L | C | h | Fastness to weathering DE |
|---|---|---|---|---|---|---|
| a | 0.15g | $Ti(i\text{-}OPr)_4$ | 49.1 | 45.1 | 42.8 | 0.5 |
| b | 0.10g | $La(NO_3)_3 \cdot 5H_2O$ | 44.8 | 38.7 | 30.4 | 0.6 |
| c | 0.25g | $Ce(NO_3)_3 \cdot 6H_2O$ | 48.7 | 43.9 | 36.2 | 0.7 |

Example 4: (BiOI/A)

A mixture consisting of 70 g of bismuth nitrate solution (403.3 g of Bi per L) and 200 mL of 20 % acetic acid is added, at room temperature, with vigorous stirring, to a solution of 16 g of sodium iodide, 0.50 g of sodium tungstate and 30 g of 30 % sodium hydroxide solution in 600 mL of water. A red precipitate forms. The pH of the suspension is adjusted to 3.2 using sodium hydroxide solution (8 %) and stirring is carried out for 24 hours. The stirrer is then switched off; decanting, addition of water and stirring up again are carried out three times; finally, filtration is carried out and the filter cake is washed three times with 200 mL of water. After drying at 100°C, the yield, based on $Bi(NO_3)_3$, is practically quantitative.

| Example 4 | Amount | Starting material | L* | C* | h | Fastness to weathering DE |
|---|---|---|---|---|---|---|
| | 0.50g | $Na_2WO_4 \cdot 2H_2O$ | 53.0 | 54.1 | 44.4 | 0.6 |

Examples 5.1. a-i (BiOI/Br/M)

A solution consisting of 315 g of bismuth nitrate solution (403:3 g of Bi per L), 125 mL of acetic acid (80 %) and 10.4 g of magnesium nitrate hexahydrate is stirred, at room temperature, into a solution of 40.4 g of potassium iodide, 19.3 g of potassium bromide and 90 g of sodium acetate in 3.6 L of water. A yellow to orange-red precipitate is formed. The pH of the suspension is increased to 5.0 using sodium hydroxide solution (20 %) and stirring is carried out overnight. The precipitate is then filtered off, washed with water until salt-free and dried at 110°C.

Instead of magnesium nitrate hexahydrate, the starting materials indicated in the following Table are used in Examples 5.1. b-i.

| Example 5.1 | Amount [g] | Starting material | L* | C* | h | Fastness to weathering DE |
|---|---|---|---|---|---|---|
| a | 10.4 | $Mg(NO_3)_2 \cdot 6H_2O$ | 66.9 | 68.0 | 55.4 | 2.2 |

(continued)

| Example 5.1 | Amount [g] | Starting material | L* | C* | h | Fastness to weathering DE |
|---|---|---|---|---|---|---|
| b | 9.6 | $Ca(NO_3)_2•4H_2O$ | 66.7 | 66.8 | 54.6 | 4.7 |
| c | 10.6 | $Ba(NO_3)_2$ | 67.2 | 67.9 | 56.1 | 2.4 |
| d | 12.1 | $Zn(NO_3)_2•6H_2O$ | 67.6 | 69.2 | 56.2 | 2.8 |
| e | 15.2 | $Al(NO_3)_3•9H_2O$ | 67.3 | 68.5 | 55.8 | 1.0 |
| f | 15.5 | $Y(NO_3)_3•6H_2O$ | 66.6 | 67.0 | 54.7 | 1.7 |
| g | 16.8 | $La(NO_3)_3•5H_2O$ | 67.2 | 68.5 | 56.0 | 0.8 |
| h | 17.6 | $Ce(NO_3)_3•6H_2O$ | 67.6 | 68.8 | 57.1 | 2.2 |
| i | 6.9 | $ZrO(NO_3)_2•xH_2O$ | 69.1 | 71.7 | 58.3 | 1.1 |

Examples 5.2. a-i: (BiOI/CI/M)

A solution consisting of 315 g of bismuth nitrate solution (403.3 g of Bi per L), 125 mL of acetic acid (80 %) and 10.4 g of magnesium nitrate hexahydrate is stirred, at room temperature, into a solution of 40.4 g of potassium iodide, 12.1 g of potassium chloride and 90 g of sodium acetate in 3.6 L of water. A yellow to orange-red precipitate forms. The pH of the suspension is increased to 5.0 using sodium hydroxide solution (20 %) and stirring is carried out overnight. The precipitate is then filtered off, washed with water until salt-free and dried at 110°C.

Instead of magnesium nitrate hexahydrate, the starting materials indicated in the following Table are used in Examples 5.2. b-i.

| Example 5.2 | Amount [g] | Starting material | L* | C* | h | Fastness to weathering DE |
|---|---|---|---|---|---|---|
| a | 10.4 | $Mg(NO_3)_2•6H_2O$ | 68.1 | 68.8 | 56.8 | 12.6 |
| b | 9.6 | $Ca(NO_3)_2•4H_2O$ | 68.0 | 69.0 | 56.6 | 12.4 |
| c | 10.6 | $Ba(NO_3)_2$ | 67.8 | 67.8 | 56.9 | 10.8 |
| d | 12.1 | $Zn(NO_3)_2•6H_2O$ | 69.0 | 70.0 | 57.9 | 13.6 |
| e | 15.2 | $Al(NO_3)_3•9H_2O$ | 69.8 | 71.7 | 59.2 | 3.2 |
| f | 15.5 | $Y(NO_3)_3•6H_2O$ | 69.0 | 71.3 | 58.3 | 4 |
| g | 16.8 | $La(NO_3)_3•5H_2O$ | 69.0 | 70.3 | 58.1 | 7.2 |
| h | 17.6 | $Ce(NO_3)_3•6H_2O$ | 66.6 | 67.2 | 55.5 | 1.0 |
| i | 6.9 | $ZrO(NO_3)_2•xH_2O$ | 74.1 | 73.8 | 64.8 | 3.2 |

Examples 5.3. a-i: (BiOI/F/M)

A solution consisting of 315 g of bismuth nitrate solution. (403.3 g of Bi per L), 125 mL of acetic acid (80 %) and 10.4 g of magnesium nitrate hexahydrate is stirred, at room temperature, into a solution of 40.4 g of potassium iodide, 6.7 g of sodium fluoride and 90 g of sodium acetate in 3.6 L of water. A yellow to orange-red precipitate forms. The pH of the suspension is increased to 5.0 using sodium hydroxide solution (20 %) and stirring is carried out overnight. The precipitate is then filtered off, washed with water until salt-free and dried at 110°C.

Instead of magnesium nitrate hexahydrate, the starting materials indicated in the following Table are used in Examples 5.3. b-i.

| Example 5.3 | Amount [g] | Starting material | L* | C* | h | Fastness to weathering DE |
|---|---|---|---|---|---|---|
| a | 10.4 | $Mg(NO_3)_2•6H_2O$ | 51.7 | 57.8 | 39.1 | 0.8 |
| b | 9.6 | $Ca(NO_3)_2•4H_2O$ | 52.5 | 59.0 | 40.0 | 1.8 |
| c | 10.6 | $Ba(NO_3)_2$ | 50.7 | 53.5 | 39.3 | 1.6 |

(continued)

| Example 5.3 | Amount [g] | Starting material | L* | C* | h | Fastness to weathering DE |
|---|---|---|---|---|---|---|
| d | 12.1 | $Zn(NO_3)_2$•$6H_2O$ | 52.0 | 58.2 | 39.5 | 1.8 |
| e | 15.2 | $Al(NO_3)_3$•$9H_2O$ | 53.4 | 59.1 | 41.2 | 2.5 |
| f | 15.5 | $Y(NO_3)_3$•$6H_2O$ | 52.3 | 58.2 | 40.5 | 2.1 |
| g | 16.8 | $La(NO_3)_3$•$5H_2O$ | 53.3 | 59.1 | 42.0 | 1.5 |
| h | 17.6 | $Ce(NO_3)_3$•$6H_2O$ | 52.1 | 57.4 | 40.7 | 0.7 |
| i | 6.9 | $Zro(NO_3)_2$•$XH_2O$ | 55.0 | 60.9 | 43.6 | 1.5 |

Examples 6.1. a-d: (BiOl/Br/A)

A solution consisting of 315 g of bismuth nitrate solution (403.3 g of Bi per L) and 125 mL of acetic acid (80 %) is stirred, at room temperature, into a solution of 37.7 g of potassium iodide, 15.6 g of potassium bromide, 90 g of sodium acetate and 7.8 g of sodium sulfate in 3.6 L of water. A yellow to orange-red precipitate forms. The pH of the suspension is increased to 5.0 using sodium hydroxide solution (20 %) and stirring is carried out overnight. The precipitate is then filtered off, washed with water until salt-free and dried at 110°C. Instead of sodium sulfate, the starting materials indicated in the following Table are used in Examples 6.1. b-d.

| Example 6.1 | Amount.[g] | Starting material | L* | C* | h | Fastness to weathering DE |
|---|---|---|---|---|---|---|
| a | 7.8 | $Na_2SO_4$ | 68.0 | 69.7 | 56.5 | 2.6 |
| b | 14.0 | $Na_3PO_4$•$12H_2O$ | 67.4 | 68.7 | 55.7 | 1.3 |
| c | 8.2 | water glass (27 % $SiO_2$) | 67.5 | 69.6 | 55.9 | 2.0 |
| d | 18.2 | $Na_2WO_4$•$2H_2O$ | 75.9 | 72.1 | 67.1 | 4.0 |

Examples 6.2 a-d: (BiOl/Cl/A)

A solution consisting of 315 g of bismuth nitrate solution (403.3 g of Bi per L) and 125 mL of acetic acid (80 %) is stirred, at room temperature, into a solution of 37.7 g of potassium iodide, 9.8 g of potassium chloride, 90 g of sodium acetate and 7.8 g of sodium sulfate in 3.6 L of water. A yellow to orange-red precipitate forms. The pH of the suspension is increased to 5.0 using sodium hydroxide solution (20 %) and stirring is carried out overnight. The precipitate is then filtered off, washed with water until salt-free and dried at 110°C. Instead of sodium sulfate, the starting materials indicated in the following Table are used in Examples 6.2 b-d.

| Example 6.2 | Amount [g] | Starting material | L* | C* | h | Fastness to weathering DE |
|---|---|---|---|---|---|---|
| a | 7.8 | $Na_2SO_4$ | 71.3 | 71.9 | 60.6 | 4.4 |
| b | 14.0 | $Na_3PO_4$•$12H_2O$ | 69.2 | 71.1 | 57.7 | 1.7 |
| c | 8.2 | water glass (27.% $SiO_2$) | 69.6 | 71.8 | 58.8 | 2.7 |
| d | 18.2 | $Na_2WO_4$•$2H_2O$ | 79.1 | 72.7 | 72.0 | 5.1 |

Examples 6.3 a-d: (BiOl/F/A)

A solution consisting of 315 g of bismuth nitrate solution (403.3 g of Bi per L) and 125 mL of acetic acid (80 %) is stirred, at room temperature, into a solution of 37.7 g of potassium iodide, 5.2 g of sodium fluoride, 90 g of sodium acetate and 7.8 g of sodium sulfate in 3.6 L of water. A yellow to orange-red precipitate forms. The pH of the suspension is increased to 5.0 using sodium hydroxide solution (20 %) and stirring is carried out overnight The precipitate is then filtered off, washed with water until salt-free and dried at 110°C. instead of sodium sulfate, the starting materials indicated in the following Table are used in Examples 6.3 b-d.

| Example 6.3 | Amount [g] | Starting material | L* | C* | h | Fastness to weathering DE |
|---|---|---|---|---|---|---|
| a | 7.8 | $Na_2SO_4$ | 59.1 | 67.6 | 46.2 | 0.7 |
| b | 14.0 | $Na_3PO_4$•$12H_2O$ | 57.5 | 63.8 | 44.7 | 2.8 |
| c | 8.2 | water glass (27 % $SiO_2$) | 59.9 | 67.4 | 48.0 | 2.4 |
| d | 18.2 | $Na_2WO_4$•$2H_2O$ | 65.6 | 70.2 | 54.1 | 4.3 |

Examples 7.1 a-g: (BiO/Br/M/A)

A solution consisting of 315 g of bismuth nitrate solution (403.3 g of Bi per L), 125 mL of acetic acid (80 %) and 9.4 g of magnesium nitrate hexahydrate is stirred, at room temperature, into a solution of 36.3 g of potassium iodide, 17.4 g of potassium bromide, 90 g of sodium acetate and 8.1 g of water glass (27 % $SiO_2$) in 3.6 L of water. A yellow to orange-red precipitate forms. The pH of the suspension is increased to 5.0 using sodium hydroxide solution (20 %) and stirring is carried out overnight. The precipitate is then filtered off,
washed with water until salt-free and dried at 110°C.

Instead of water glass and magnesium nitrate hexahydrate, the starting materials and amounts indicated in the following Table are used in Examples 7.1 b-g.

| Example 7.1 | Amount [g] | Starting material | Amount [g] | Starting material | L* | C* | h | Fastness to weathering DE |
|---|---|---|---|---|---|---|---|---|
| a | 9.4 | $Mg(NO_3)_2$• $6H_2O$ | 8.1 | water glass (27 % $SiO_2$) | 66.7 | 68.0 | 55.1 | 1.8 |
| b | 8.6 | $Ca(NO_3)_2$• $4H_2O$ | 8.1 | water glass (27 % $SiO_2$) | 66.9 | 68.5 | 55.5 | 2.5 |
| c | 10.9 | $Zn(NO_3)_2$• $4H_2O$ | 8.1 | water glass (27% $SiO_2$) | 66.8 | 68.5 | 55.5 | 1.9 |
| d | 9.1 | $Al(NO_3)_3$• $9H_2O$ | 12.2 | water glass (27 % $SiO_2$) | 66.2 | 67.7 | 54.3 | 1.9 |
| e | 4.6 | $ZrO(NO_3)_2$• $xH_2O$ | 3.2 | water glass (27 % $SiO_2$) | 67.4 | 69.1 | 56.0 | 2.2 |
| f | 1.6 | $Ce(NO_3)_3$• $6H_2O$ | 1.4 | water glass (27 % $SiO_2$) | 67.5 | 68.0 | 56.5 | 1.6 |
| g | 2.5 | $ZrO(NO_3)_2$• $xH_2O$ | 5.5 | $Na_3PO_4$• $12H_2O$ | 67.0 | 67.9 | 55.5 | 1.4 |

Example 7.2: (BiOI/Br/A/M)

A mixture consisting of 70 g of bismuth nitrate solution (403.3 g of Bi per L), 200 mL of 20 % acetic acid and 0.15 g of zirconyl nitrate $ZrO(NO_3)_2$•$xH_2O$ is added, at room temperature, with vigorous stirring, to a solution of 8.7 g of sodium iodide, 4.3 g of potassium bromide, 0.14 g of citric acid and 30 g of 30 % sodium hydroxide solution in 600 mL of water. An orange-red precipitate forms. The pH of the suspension is adjusted to 3.2 using sodium hydroxide solution (8 %) and stirring is carried out for 24 hours. The stirrer is then switched off; decanting, addition of water and stirring up again are carried out three times; finally, filtration is carried out and the filter cake is washed three times with 200 mL of water. After drying at 100°C, the yield, based on $Bi(NO_3)_3$, is practically quantitative.

| Example 7.2 | Amount [g] | Starting material | Amount [g] | Starting material | L* | C* | h | Fastness to weathering DE |
|---|---|---|---|---|---|---|---|---|
| | 0.15 | $ZrO(NO_3)_2 \cdot xH_2O$ | 0.14 | Citric acid | 64.4 | 69.7 | 53.7 | 0.7 |

Examples 7.3 a-g: (BiOI/Cl/M/A)

A solution consisting of 315 g of bismuth nitrate solution (403.3 g of Bi per L), 125 mL of acetic acid (80 %) and 9.4 g of magnesium nitrate hexahydrate is stirred, at room temperature, into a solution of 36.3 g of potassium iodide, 10.9 g of potassium chloride, 90 g of sodium acetate and 8.1 g of water glass (27 % $SiO_2$) in 3.6 L of water. A yellow to orange-red precipitate forms. The pH of the suspension is increased to 5.0 using sodium hydroxide solution (20 %) and stirring is carried out overnight. The precipitate is then filtered off, washed with water until salt-free and dried at 110°C.

Instead of water glass and magnesium nitrate hexahydrate, the starting materials and amounts indicated in the following Table are used in Examples 7.3 b-g.

| Example 7.3 | Amount [g] | Starting material | Amount [g] | Stating material | L* | C* | h | Fastness to weathering DE |
|---|---|---|---|---|---|---|---|---|
| a | 9.4 | $Mg(NO_3)_2 \cdot 6H_2O$ | 8.1 | water glass (27 % $SiO_2$) | 68.2 | 70.6 | 57.1 | 5.0 |
| b | 8.6 | $Ca(NO_3)_2 \cdot 4H_2O$ | 8.1 | water glass (27 % $SiO_2$) | 68.6 | 71.0 | 57.7 | 5.1 |
| c | 10.9 | $Zn(NO_3)_2 \cdot 4H_2O$ | 8.1 | water glass (27 % $SiO_2$) | 68.4 | 70.9 | 57.5 | 4.3 |
| d | 9.1 | $Al(NO_3)_3 \cdot 9H_2O$ | 12.2 | water glass (27 % $SiO_2$) | 67.7 | 70.0 | 56.4 | 3.8 |
| e | 4.6 | $ZrO(NO_3)_2 \cdot xH_2O$ | 3.2 | water glass (27 % $SiO_2$) | 70.4 | 72.0 | 59.8 | 2.6 |
| f | 1.6 | $Ce(NO_3)_3 \cdot 6H_2O$ | 1.4 | water glass (27% $SiO_2$) | 70.6 | 71.7 | 60.1 | 3.9 |
| g | 2.5 | $ZrO(NO_3)_2 \cdot xH_2O$ | 5.5 | $Na_3PO_4 \cdot 12H_2O$ | 68.8 | 71.1 | 57.8 | 2.0 |

Examples 7.4 a-g: (BiOI/F/M/A

A solution consisting of 315 g of bismuth nitrate solution (403.3 g of Bi per L), 125 mL of acetic acid (80 %) and 9.4 g of magnesium nitrate hexahydrate is stirred, at room temperature, into a solution of 36.3 g of potassium iodide, 5.8 g of sodium fluoride, 90 g of sodium acetate and 8.1 g of water glass (27 % $SiO_2$) in 3.6 L of water. A yellow to orange-red precipitate forms. The pH of the suspension is increased to 5.0 using sodium hydroxide solution (20 %) and stirring is carried out overnight. The precipitate is then filtered off, washed with water until salt-free and dried at 110°C.

Instead of water glass and magnesium nitrate hexahydrate, the starting materials and amounts indicated in the following Table are used in Examples 7.4 b-g.

| Example 7.4 | Amount [g] | Starting material | Amount [g] | Starting material | L* | C* | h | Fastness to weathering DE |
|---|---|---|---|---|---|---|---|---|
| a | 9.4 | $Mg(NO_3)_2 \cdot 6H_2O$ | 8.1 | water glass (27 % $SiO_2$) | 56.0 | 62.9 | 43.8 | 2.0 |

(continued)

| Example 7.4 | Amount [g] | Starting material | Amount [g] | Starting material | L* | C* | h | Fastness to weathering DE |
|---|---|---|---|---|---|---|---|---|
| b | 8.6 | $Ca(NO_3)_2$• $4H_2O$ | 8.1 | water glass (27 % $SiO_2$) | 56.8 | 64.3 | 45.3 | 2.0 |
| c | 10.9 | $Zn(NO_3)_2$• $4H_2O$ | 8.1 | water glass (27 % $SiO_2$) | 56.8 | 64.0 | 45.0 | 2.2 |
| d | 9.1 | $Al(NO_3)_3$• $9H_2O$ | 12.2 | water glass (27 % $SiO_2$) | 57.1 | 63.7 | 45.7 | 1.7 |
| e | 4.6 | $zrO(NO_3)_2$• $xH_2O$ | 3.2, | water glass (27 % $SiO_2$) | 56.8 | 64.2 | 44.5 | 2.2 |
| f | 1.6 | $Ce(NO_3)_3$• $6H_2O$ | 1.4 | water glass (27 % $SiO_2$) | 56.9 | 64.4 | 44.4 | 2.3 |
| g | 2.5 | $zrO(NO_3)_2$• $xH_2O$ | 5.5 | $Na_3PO_4$. $12H_2O$ | 56.5 | 63.6 | 43.1 | 2.9 |

## Claims

**1.** A coloured pigment of the general formula

$$BiOI_aBr_bCl_cM_dA_e;$$

wherein

M is a cation of the alkaline-earth metals, a cation of the earth metals, a cation of the rare earth metals including the lanthanides or a cation of the metals Ge, Sn, Pb, Sb, Ti, Zr, Hf, Mn, Re, Fe, Ru, Os or Zn or a mixture of cations of those metals;
A is a fluoride, aquoxide, hydroxide, carbonate, silicate, molybdate, tungstate, sulfate, borate or phosphate anion or a mixture of those anions;
a is a number from 0.10 to 0.999; preferably from 0.50 to 0.90;
b, c, d and e are numbers from 0 to 0.90; preferably from 0.10 to 0.50;
$a + b + c + d + e = 1$ and $a + b + c < 1$.

**2.** A coloured pigment according to claim 1, wherein the coloured pigment is a solid solution.

**3.** A coloured pigment according to either claim 1 or claim 2, wherein M is a cation of the metals Mg, Ca, Ba, Zn, Sn, Fe, Mn, Ti, Zr, Ge, Al, Y, La, Ce or a mixture of cations of those metals.

**4.** A coloured pigment according to any one of claims 1 to 3, wherein the coloured pigment is selected from the group consisting of:

- $BiOI_a(WO_4)_e$,
- $BiOI_a(SiO_4)_e$,
- $BiOI_aBr_bCl_cF_e$,
- $BiOI_aBr_bCl_cF_{e'}Ca_d$,
- $BiOI_aBr_bCl_cF_{e'}(WO_4)_{e''}$,
- $BiOI_aBr_bCl_cF_{e'}Zr_d(OH)_{e''}$
- $BiOI_aBr_bCl_cF_{e'}Zr_d,(SO_4)_{e''}$
- $BiOI_aBr_bCl_cF_{e'}Zr_d(SiO_4)_{e''}$ and
- $BiOI_aBr_bCl_cF_{e'}Al_d(PO_4)_{e''}$,

wherein a is a number from 0.10 to 0.999; preferably from 0.50 to 0.90; b, c, d and e are numbers from 0 to 0.90;

preferably from 0.10 to 0.50; a+b+c+d+e=1:e'+e"=e anda+b+c<1.

5. A substance composition comprising the coloured pigment according to any one of claims 1 to 4 and at least one inorganic or organic pigment.

6. A composition comprising

(a) from 75 to 97.5 % by weight of the coloured pigment according to any one of claims 1 to 4,
(b) from 0.1 to 10 % by weight of a surface-active substance, and
(c) from 0.1 to 25 % by weight of at least one dust-binding agent,

the sum of the components (a) to (c) adding up to 100 % by weight.

7. A composition comprising a high molecular weight organic material and from 0.01 to 80 % by weight, preferably from 0.1 to 30% by weight, based on the high molecular weight organic material, of a coloured pigment according to any one of claims 1 to 4.

8. A process for the preparation of a bismuth oxide halide by combining $I^-$ and, optionally, $Br^-$ , $Cl^-$ and/or $F^-$ with a solution of $BiO^+$ or $Bi^{3+}$ ions in a solvent under conditions such that a solid which is insoluble in the solvent precipitates out, in which process M and/or A are present in the solvent during precipitation of the solid, and the solid precipitating out has the general formula:

$$BiOI_aBr_bCl_cM_dA_e\ ;$$

wherein M, A, a, b, c, d and e are as defined in claim 1.

9. A process according to claim 8, wherein a bismuth oxide halide wherein bismuth has been partially replaced by zirconium, titanium or a mixture of zirconium and titanium and/or wherein iodide has been partially replaced by tungstate is prepared, thus bringing about a shift towards yellow in a solid solution of the general formula

$$BiOI_aBr_bCl_c$$

wherein a is a number from 0.10 to 1 and b and c are numbers from 0 to 0.90 and a + b +c=1.

10. A process according to claim 8, wherein a bismuth oxide halide wherein bismuth has been partially replaced by lanthanum and/or wherein iodide has been partially replaced by fluoride is prepared, thus bringing about a shift towards red in a solid solution of the general formula

$$BiOI_aBr_bCl_c$$

wherein a is a number from 0.10 to 1 and b and c are numbers from 0 to 0.90 and a + b +c= 1.

**Patentansprüche**

1. Buntpigment der allgemeinen Formel

$$BiOI_aBr_bCl_cM_dA_e;$$

worin

M für ein Kation der Erdalkalimetalle, für ein Kation der Erdmetalle, für ein Kation der Seltenerdmetalle einschliesslich der Lanthanoide oder für ein Kation der Metalle Ge, Sn, Pb, Sb, Ti, Zr, Hf, Mn, Re, Fe, Ru, Os oder Zn oder für ein Gemisch von Kationen dieser Metalle steht;
A für ein Fluorid-, Aquoxid-, Hydroxid-, Carbonat-, Silikat-, Molybdat-, Wolframat-, Sulfat-, Borat-, Phosphatanion oder für ein Gemisch dieser Anionen steht;
a eine Zahl von 0,10 bis 0,999 ist; bevorzugt von 0,50 bis 0,90;
b, c, d und e Zahlen von 0 bis 0,90 sind; bevorzugt von 0,10 bis 0,50;

a+b+c+d+e=1 unda+b+c<1 1 ist.

2. Buntpigment nach Anspruch 1, wobei das Buntpigment eine Festlösung ist.

3. Buntpigment nach Anspruch 1 oder 2, worin M für ein Kation der Metalle Mg, Ca, Ba, Zn, Sn, Fe, Mn, Ti, Zr, Ge, Al, Y, La, Ce oder für ein Gemisch von Kationen dieser Metalle steht.

4. Buntpigment nach einem der Ansprüche 1 bis 3, wobei das Buntpigment aus der Gruppe ausgewählt ist, die besteht aus:

- $BiOI_a(WO_4)_e$,
- $BiOI_a(SiO_4)_e$,
- $BiOI_aBr_bCl_cF_e$,
- $BiOi_aBr_bCl_eF_eCa_d$,
- $BiOI_aBr_bCl_cF_{e'}(WO_4)_{e''}$,
- $BiOI_aBr_bCl_eF_{e'}Zr_d(OH)_{e''}$,
- $BiOI_aBr_bCl_cF_{e'}Zr_d(SO_4)_{e''}$,
- $BiOI_aBr_bCl_eF_{e'}Zr_d(SiO_4)_{e''}$, und
- $BiOI_aBr_bCl_cF_{e'}Al_d(PO_4)_{e''}$,

wobei a eine Zahl von 0,10 bis 0,999 ist; bevorzugt von 0,50 bis 0,90; b, c, d und e Zahlen von 0 bis 0,90 sind; bevorzugt von 0,10 bis 0,50; a + b + c + d + e = 1; e' + e" = eunda+b+c<1 ist.

5. Stoffzusammensetzung, enthaltend das Buntpigment gemäss einem der Ansprüche 1-4 und mindestens ein anorganisches oder organisches Pigment.

6. Zusammensetzung, enthaltend

(a) von 75 bis 97,5 Gew.-% des Buntpigmentes gemäss einem der Ansprüche 1-4,
(b) von 0,1 bis 10 Gew.% einer oberflächenaktiven Substanz, und
(c) von 0,1 bis 25 Gew.-% mindestens eines staubbindenden Mittels,

wobei die Summe der Bestandteile (a) bis (c) 100 Gew.-% ergibt.

7. Zusammensetzung, enthaltend ein hochmolekulares organisches Material und von 0,01 bis 80 Gew.-%, bevorzugt 0,1 bis 30 Gew.%, bezogen auf das hochmolekulare organische Material, und ein Buntpigment gemäss einem der Ansprüche 1-4.

8. Verfahren zur Herstellung eines Bismutoxidhalogenids durch Kombination von $I^-$ und gegebenenfalls $Br^-$, $Cl^-$ und/oder $F^-$ mit einer Lösung von $BiO^+$ - oder $Bi^{3+}$-Ionen in einem Lösemittel unter Bedingungen, so dass ein im Lösemittel unlöslicher Feststoff ausfällt, wobei M und/oder A während der Ausfällung des Feststoffes im Lösemittel vorhanden sind und der ausfallende Feststoff die allgemeine Formel:

$$BiOI_aBr_bCl_cM_dA_e;$$

aufweist, worin M, A, a , b, c, d und e wie in Anspruch 1 definiert sind.

9. Verfahren nach Anspruch 8, wobei ein Bismutoxidhalogenid hergestellt wird, worin Bismut partiell durch Zirkonium, Titanium oder einem Gemisch aus Zirkonium oder Titanium ersetzt ist und/oder worin Iodid partiell durch Wolframat ersetzt ist, wodurch eine Gelbverschiebung in einer Festlösung der allgemeinen Formel

$$BiOt_aBr_bCl_c$$

worin a eine Zahl von 0,10 bis 1 ist und b und c Zahlen von 0 bis 0,90 sind und a + b + c = 1 ist, erreicht wird.

10. Verfahren nach Anspruch 8, wobei ein Bismutoxidhalogenid hergestellt wird, worin Bismut partiell durch Lanthan und/oder Iodid partiell durch Fluorid ersetzt ist, wodurch eine Rotverschiebung in einer Festlösung der allgemeinen Formel

$BiOI_aBr_bCl_c$

worin a eine Zahl von 0,10 bis 1 ist und b und c Zahlen von 0 bis 0,90 sind und a + b + c = 1 ist, erreicht wird.

**Revendications**

1. Pigment coloré de formule générale

$$BiOI_aBr_bCl_cM_dA_e\ ;$$

dans laquelle

M représente un cation de métaux alcalino-terreux, un cation de métaux terreux, un cation de métaux de terres rares y compris les lanthanoïdes, ou un cation des métaux Ge, Sn, Pb, Sb, Ti, Zr, Hf, Mn, Re, Fe, Ru, Os ou Zn ou un mélange de cations de ces métaux;
A représente un anion fluorure, aquoxyde, hydroxyde, carbonate, silicate, molybdate, tungsténate, sulfate, borate, phosphate ou un mélange de ces anions;
a est un nombre de 0,10 à 0,999; de préférence de 0,50 à 0,90;
b, c, d et e sont des nombrés de 0 à 0,90; de préférence de 0,10 à 0,50;
a + b + c + d + e = 1 et a + b + c < 1.

2. Pigment coloré selon la revendication 1, où le pigment coloré est une solution solide.

3. Pigment coloré selon la revendication 1 ou 2, où M représente un cation des métaux Mg, Ca, Ba, Zn, Sn, Fe, Mn, Ti, Zr, Ge, Al, Y, La, Ce ou un mélange de cations de ces métaux.

4. Pigment coloré selon l'une des revendications 1 à 3, le pigment coloré étant choisi dans le groupe constitué par :

- $BiOI_a(WO_4)_e$,
- $BiOI_a(SiO_4)_e$,
- $BiOI_aBr_bCl_cFe_e$,
- $BiOI_aBr_bCl_cFe_eCa_d$,
- $BiOI_aBr_bCl_cFe_{e'}(WO_4)_{e''}$,
- $BiOI_aBr_bCl_cFe_{e'}Zr_d(OH)_{e''}$,
- $BiOI_aBr_bCl_cFe_{e'}Zr_d(SO_4)_{e''}$,
- $BiOI_aBr_bCl_eFe_{e'}Zr_d(SiO_4)_{e''}$, et
- $BiOI_aBr_bCl_cFe_{e'}Al_d(PO_4)_{e''}$,

où a est un nombre de 0,10 à 0,999; de préférence de 0,50 à 0,90; b, c, d et e sont des nombres de 0 à 0,90; de préférence de 0,10 à 0,50; a + b + c + d + e - 1; e' + e" = e et a + b + c < 1.

5. Composition de matières, contenant le pigment coloré selon l'une des revendications 1-4, et au moins un pigment inorganique ou organique.

6. Composition contenant :

(a) de 75 à 97,5 % en masse du pigment coloré selon l'une des revendications 1-4,
(b) de 0,1 à 10 % en masse d'une substance tensioactive, et
(c) de 0,1 à 25 % en masse d'au moins un agent liant la poussière,

la somme des constituants (a) à (c) est de 100 %.

7. Composition contenant une matière organique de haut poids moléculaire et de 0,01 à 80 % en masse, de préférence de 0,1 à 30 % en masse, par rapport à la matière organique de haut poids moléculaire, et un pigment coloré selon l'une des revendications 1-4.

**8.** Procédé pour la préparation d'un oxyhalogénure de bismuth par combinaison de $I^-$ et éventuellement $Br^-$, $Cl^-$ et/ou $F^-$ avec une solution d'ions $BiO^+$ ou $Bi^{3+}$, dans un solvant sous de telles conditions qu'il précipite une matière solide insoluble dans le solvant, M et/ou A sont présents au cours de la précipitation de la matière solide dans le solvant et la matière solide précipitée présente la formule générale :

$$BiOI_aBr_bCl_cM_dA_c\ ;$$

où M, A, a, b, c, d, et e sont définis comme dans la revendication 1.

**9.** Procédé selon la revendication 8, où l'on prépare un oxyhalogénure de bismuth, où le bismuth est partiellement remplacé par le zirconium, le titane
ou un mélange de zirconium ou de titane et/ou dans lequel l'iodure est partiellement remplacé par le tungsténate, ce qui provoque un décalage vers le jaune dans une solution solide de formule générale

$$BiOI_aBr_bCl_c\ ;$$

où a est un nombre de 0,10 à 1 et b et c sont des nombres de 0 à 0,90 et a + b + c = 1.

**10.** Procédé selon la revendication 8, où l'on prépare un oxyhalogénure de bismuth, où le bismuth est partiellement remplacé par le lanthane et/ou l'iodure par le fluorure, ce qui provoque un décalage vers le rouge dans une solution solide de formule générale

$$BiOI_aBr_bCl_c\ ;$$

où a est un nombre de 0,10 à 1 et b et c sont des nombres de 0 à 0,90 et a + b + c = 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 839874 A
- DE 19529837
- DE 2933778
- DE 2940185
- DE 3004083
- US 4455174 A
- US 4316746 A
- US 4752460 A
- GB 444740 A
- US 4252570 A
- US 6464772 B
- US 3370971 A
- US 3639133 A
- US 4046588 A
- US 5123965 A
- US 4762523 A
- DE 2162484 A
- US 132BB70 A


### Non-patent literature cited in the description


- **R.D. SHANNON ; R.K. WARING.** *J. Phys. Chem. Solids,* 1985, vol. 46 (3), 325-330
- **HAO, Z. ; IQBAL, A.** *Chemical Society Reviews,* 1997, vol. 26, 203-213
- Ullmanns Enzyklopädie der technischen Chemie. vol. 18, 565